# EUROPEAN PATENT APPLICATION

(11) **EP 4 852 409 A1**
(43) Date of publication of application: **09.12.2026**
(21) Application number: 25760718.4
(22) Date of filing: 26.01.2025
(51) Int. Cl.: H04L 67/146, H04L 9/32

(54) **SERVICE PROCESSING METHOD AND APPARATUS**

(30) Priority: 27.02.2024 CN 202410221822
(71) Applicant: HUAWEI TECHNOLOGIES CO., LTD., Shenzhen, Guangdong 518129 (CN)
(72) Inventor: LI, Zhuoming, Shenzhen, Guangdong 518129 (CN); DING, Hui, Shenzhen, Guangdong 518129 (CN); ZHU, Jintao, Shenzhen, Guangdong 518129 (CN); ZHANG, Bo, Shenzhen, Guangdong 518129 (CN); MO, Ruo, Shenzhen, Guangdong 518129 (CN)
(74) Representative: Huawei European IPR
(86) International application number: PCT/CN2025/075276
(87) International publication number: WO 2025/180174

(57) **Abstract**

A service processing method and an apparatus are provided, relating to the field of communication technologies. The method includes: receiving a first request, where the first request includes a service identifier, and the service identifier is used to identify a service that a user requests to subscribe to; and determining a first user identifier, where the first user identifier is used to identify the user, the first user identifier is different from another first user identifier created for another service that the user requests to subscribe to, the first user identifier is used to request to subscribe to the service, and the first user identifier is further used to request to access the service. In the method, a network generates different first user identifiers for different services that the user requests to subscribe to, and the user subscribes to or accesses the different services by using the different first user identifiers, thereby avoiding user privacy leakage.

## Description

### CROSS-REFERENCE TO RELATED APPLICATIONS

This application claims priority to Chinese Patent Application No. 202410221822.6, filed with the China National Intellectual Property Administration on February 27, 2024 and entitled "SERVICE PROCESSING METHOD AND APPARATUS", which is incorporated herein by reference in its entirety.

### TECHNICAL FIELD

This application relates to the field of communication technologies, and in particular, to a service processing method and an apparatus.

### BACKGROUND

To access services provided by a third-party service provider SP (Service Provider), users need to sign a service agreement with the third-party service provider. Currently, most third-party service providers uses a user number (for example, a user mobile number) as a user account to sign a service agreement with a user. When the user uses a user number as a user account to subscribe to or access a third-party service, third-party service subscription or access record information corresponding to the user number is vulnerable to being obtained by an application server. For example, when the user uses a same user number as a user account to subscribe to or access multiple different third-party services, subscription or access records of the user can be easily obtained and leaked by third-party service providers. Therefore, using a user number as a user account to subscribe to or access a third-party service poses a risk of leaking user privacy information.

### SUMMARY

Embodiments of this application provide a service processing method, an apparatus, and a system.

According to a first aspect, a method is provided. The method includes the following steps: receiving a first request, where the first request includes a service identifier, and the service identifier is used to identify a service that a user requests to subscribe to; and determining a first user identifier, where the first user identifier is used to identify the user, the first user identifier is different from another first user identifier created for another service that the user requests to subscribe to, the first user identifier is used to request to subscribe to the service, and the first user identifier is further used to request to access the service.

In the foregoing implementation, a network may generate different first user identifiers for the user when the user subscribes to or accesses different services, thereby avoiding user privacy leakage.

In a possible implementation, the receiving the first request includes: receiving the first request from a first network element, where the first network element is an access and mobility management network element or an operator portal.

In a possible implementation, the method further includes: sending a second request to a first application server, where the second request includes the first user identifier, the second request is used to request to subscribe to the service, and the first application server is configured to process the service; and receiving a second response from the first application server, where the second response is used to indicate whether the service that the user requests to subscribe to is successfully subscribed to.

In a possible implementation, the method further includes: receiving a first authentication request from the first application server, where the first authentication request includes the first user identifier; and authenticating, based on the first user identifier, that the user is an authorized user.

By authenticating validity of the first user identifier, an unauthorized user may be prevented from obtaining the first user identifier to access a service that is not subscribed to by the unauthorized user, thereby ensuring security of service access.

In a possible implementation, the first request includes a second user identifier, where the second user identifier is a user number of the user and/or a subscriber permanent identifier SUPI.

In a possible implementation, the method further includes: sending a first response to the first network element, where the first response is used to indicate that subscription of the service requested by the user succeeds, and the first response includes the first user identifier.

In a possible implementation, the first response further includes a validity period, the validity period is used to indicate a period in which the first user identifier is valid, and the first user identifier is unavailable when the validity period expires.

By setting the validity period, an identity management network element may manage the period in which the first user identifier is valid, periodically renew the service subscribed to by the user, and authenticate validity of the first user identifier in a renewal process. Therefore, security of the first user identifier can be improved.

In a possible implementation, the method further includes: storing an association relationship between the first user identifier, the service identifier, and the second user identifier; and authenticating, based on the association relationship between the first user identifier, the service identifier, and the second user identifier after receiving the first authentication request from the first application server, that the user holding the first user identifier is an authorized user.

In a possible implementation, the first request further includes a user identity attribute, and the user identity attribute is used to indicate an identity type used by the user to request to subscribe to the service.

In a possible implementation, the determining the first user identifier includes: the first user identifier created for the user identity attribute of the user and used to request to subscribe to the service is different from another first user identifier created for another identity attribute of the user and used to request to subscribe to the service.

In this implementation, the user may subscribe to a same service for multiple times by using different identity attributes, and the network may generate and deliver different first user identifiers for different identity attributes of the same user, thereby ensuring that privacy of the user accessing the service by using different identities is not leaked.

In a possible implementation, the method further includes: determining the validity period corresponding to the first user identifier.

In a possible implementation, the method further includes: determining, based on the validity period after receiving the first authentication request from the first application server, whether the first application server holds the valid first user identifier to access the service.

In a possible implementation, the first user identifier includes a first digital signature, and the method further includes: authenticating, after receiving the first authentication request from the first application server, whether the first user identifier is valid based on the first digital signature.

The first application server may authenticate, based on the first digital signature, that the first application identifier is issued by the identity management network element, thereby improving security of using the first user identifier.

In a possible implementation, the first authentication request further includes a second digital signature corresponding to the first user identifier, and the method further includes: authenticating, after receiving an authentication request including the second digital signature corresponding to the first user identifier, whether the first user identifier is valid based on the second digital signature.

By using the second digital signature, the network may authenticate that a service request carrying the second digital signature is sent by the authorized user, thereby improving security of service access.

In a possible implementation, the first authentication request further includes replay attack authentication information corresponding to the first user identifier, and the method further includes: authenticating, based on the replay attack authentication information after receiving an authentication request including the replay attack authentication information corresponding to the first user identifier, whether the user holding the first user identifier is an authorized user.

In a possible implementation, the first request further includes a first access control attribute, and the first access control attribute is used to indicate whether the user authorizes the first application server to hold the first user identifier to access other services on behalf of the user, and/or a scope in which the first application server is authorized to access the other services on behalf of the user.

By setting an access control attribute for the first user identifier, whether to allow the first application server to use the first user identifier provided by the user to access other services is determined. The user authorizes, by using the first access control attribute, the first application server to access the other services on behalf of the user, thereby making it convenient for the user to access the other services.

In a possible implementation, the second response received from the first application server further includes a second access control attribute, and the second access control attribute is used to indicate whether the first application server accepts holding the first user identifier to access the other services, and/or a scope in which the first application server accepts accessing the other services.

In a possible implementation, the method further includes: the first response sent to the first network element further includes the second access control attribute.

In a possible implementation, the method further includes: determining, based on the second access control attribute after receiving an authentication request that includes the second access control attribute, whether the first application server is authorized to hold the first user identifier to access the other services.

In a possible implementation, the method further includes: receiving a second authentication request from a second application server, where the second authentication request is used to request to authenticate whether the first application server is authorized to hold the first user identifier, and the second authentication request includes the first user identifier.

According to a second aspect, a method is provided. The method includes the following steps: sending a service subscription request to a first network element, where the service subscription request is used to request to subscribe to a service, the service subscription request includes a service identifier, and the service identifier is used to indicate the service that a user requests to subscribe to; and receiving a service subscription response, where the service subscription response is used to indicate that the service is successfully subscribed to, the service subscription response includes a first user identifier, the first user identifier is used to access the service, and the first user identifier is different from another first user identifier corresponding to another service that the user requests to access.

The foregoing method may be performed by a terminal device.

In the foregoing implementation, the terminal device may subscribe to or access different services by using different first user identifiers, so that privacy leakage can be avoided.

In a possible implementation, the service subscription request further includes a first access control attribute, the first access control attribute is used to indicate that the user authorizes the first application server to access other services on behalf of the user, and/or a scope in which the first application server is authorized to access the other services on behalf of the user, and the first application server is configured to process the service.

In a possible implementation, the service subscription request includes a user identity attribute, and the user identity attribute is used to indicate an identity type used by the user to request to subscribe to the service.

In a possible implementation, the method further includes: sending a service access request to the first application server, where the service access request is used to request to access the service, and the service access request includes the first user identifier.

In a possible implementation, the service access request includes a second access control attribute obtained from the service subscription response, and the second access control attribute is used to indicate whether the first application server accepts holding the first user identifier to access the other services, and/or a scope in which the first application server accepts accessing the other services.

In a possible implementation, the service access request includes a validity period obtained from the service subscription response, and the validity period is used to determine whether the first user identifier is valid.

In a possible implementation, the method further includes: sending a third request to the first network element, where the third request is used to request to renew the service, and the third request includes the first user identifier; and receiving a third response sent by the first network element, where the third response is used to indicate whether renewal of the third-party service succeeds, and the third response includes the first user identifier whose validity period has been updated.

In a possible implementation, the sending the third request to the first network element includes: determining, based on the validity period, that the first user identifier is about to expire, and sending the third request before the first user identifier expires.

According to a third aspect, a method is provided. The method includes the following steps: receiving a service access request, where the service access request includes a first user identifier, the first user identifier is used to access a service, and the first user identifier is different from another first user identifier corresponding to another service that the user requests to access; and sending an authentication request to the first network element, where the authentication request is used to request the first network element to authenticate the first user identifier, the first user identifier is generated by the first network element, and the authentication request includes the first user identifier.

The foregoing method may be performed by an application server.

In the foregoing implementation, the application server requests a second network element to authenticate the first user identifier, to ensure authorized use of the first user identifier.

In a possible implementation, the first user identifier includes a first digital signature, and the first digital signature is used to authenticate whether the first user identifier is valid.

In a possible implementation, the service access request includes a validity period corresponding to the first user identifier, the validity period is used to indicate a period in which the first user identifier is valid, and the first user identifier is unavailable when the validity period expires.

In a possible implementation, the service access request includes an access control attribute, the access control attribute is used to indicate whether a first application server accepts holding the first user identifier to access other services, and/or a scope in which the first application server accepts accessing the other services, and the first application server is configured to process the service.

In a possible implementation, the authentication request further includes the access control attribute, and the access control attribute is used to determine whether the first application server is authorized to hold the first user identifier to access the other services.

In a possible implementation, the authentication request further includes a second digital signature, the second digital signature is created by the user, and the second digital signature is used to authenticate whether the first user identifier is valid.

In a possible implementation, the authentication request further includes replay attack authentication information corresponding to the first user identifier, and the replay attack authentication information is used to authenticate whether the user holding the first user identifier is an authorized user.

In a possible implementation, the authentication request further includes the validity period, where the validity period is used to determine whether the first application server holds the valid first user identifier to access the service.

In a possible implementation, the method further includes: receiving an authentication response from the first network element, where the authentication response is used to indicate that authentication of the first user identifier succeeds.

In a possible implementation, the method further includes: sending the service access request to a second application server, where the service access request is used to request to access the other services, and the second application server is configured to process the other services.

According to a fourth aspect, a communication apparatus is provided. The communication apparatus includes a unit or a module configured to perform any method according to the first aspect. The communication apparatus may provide a data channel signaling control function. Specifically, the communication apparatus may include a processing unit and a transceiver unit.

The transceiver unit receives a first request, where the first request includes a service identifier, and the service identifier is used to identify a service that a user requests to subscribe to; and the processing unit determines a first user identifier, where the first user identifier is used to identify the user, the first user identifier is different from another first user identifier created for another service that the user requests to subscribe to, the first user identifier is used to request to subscribe to the service, and the first user identifier is further used to request to access the service.

In a possible implementation, the processing unit is specifically configured to: receive the first request from a first network element by using the transceiver unit, where the first network element is an access and mobility management network element or an operator portal.

In a possible implementation, the processing unit is specifically configured to: send a second request to a first application server by using the transceiver unit, where the second request includes the first user identifier, the second request is used to request to subscribe to the service, and the first application server is configured to process the service; and receive a second response from the first application server, where the second response is used to indicate whether the service that the user requests to subscribe to is successfully subscribed to.

In a possible implementation, the processing unit is specifically configured to: receive a first authentication request from the first application server by using the transceiver unit, where the first authentication request includes the first user identifier; and authenticate, based on the first user identifier, that the user is an authorized user.

In a possible implementation, the first request includes a second user identifier, where the second user identifier is a user number of the user and/or a subscriber permanent identifier SUPI.

In a possible implementation, the processing unit is specifically configured to: send a first response to the first network element by using the transceiver unit, where the first response is used to indicate that subscription of the service requested by the user succeeds, and the first response includes
the first user identifier.

In a possible implementation, the first response further includes a validity period, the validity period is used to indicate a period in which the first user identifier is valid, and the first user identifier is unavailable when the validity period expires.

In a possible implementation, the processing unit is specifically configured to: store an association relationship between the first user identifier, the service identifier, and the second user identifier; and authenticate, based on the association relationship between the first user identifier, the service identifier, and the second user identifier after receiving the first authentication request from the first application server, that the user holding the first user identifier is an authorized user.

In a possible implementation, the first request further includes a user identity attribute, and the user identity attribute is used to indicate an identity type used by the user to request to subscribe to the service.

In a possible implementation, the processing unit is specifically configured to: the first user identifier created for the user identity attribute of the user and used to request to subscribe to the service is different from another first user identifier created for another identity attribute of the user and used to request to subscribe to the service.

In a possible implementation, the processing unit is specifically configured to: determine the validity period corresponding to the first user identifier.

In a possible implementation, the processing unit is specifically configured to: determine, based on the validity period after receiving the first authentication request from the first application server, whether the first application server holds the valid first user identifier to access the service.

In a possible implementation, the first user identifier includes a first digital signature, and the processing unit is specifically configured to: authenticate, after receiving the first authentication request from the first application server, whether the first user identifier is valid based on the first digital signature.

In a possible implementation, the first authentication request further includes a second digital signature corresponding to the first user identifier, and the processing unit is specifically configured to: authenticate, after receiving an authentication request including the second digital signature corresponding to the first user identifier, whether the first user identifier is valid based on the second digital signature.

In a possible implementation, the first authentication request further includes replay attack authentication information corresponding to the first user identifier, and the processing unit is specifically configured to: authenticate, based on the replay attack authentication information after receiving an authentication request including the replay attack authentication information corresponding to the first user identifier, whether the user holding the first user identifier is an authorized user.

In a possible implementation, the first request further includes a first access control attribute, and the first access control attribute is used to indicate whether the user authorizes the first application server to hold the first user identifier to access other services on behalf of the user, and/or a scope in which the first application server is authorized to access the other services on behalf of the user.

In a possible implementation, the second response received from the first application server further includes a second access control attribute, and the second access control attribute is used to indicate whether the first application server accepts holding the first user identifier to access the other services, and/or a scope in which the first application server accepts accessing the other services.

In a possible implementation, the first response sent to the first network element further includes the second access control attribute.

In a possible implementation, the processing unit is specifically configured to: determine, based on the second access control attribute after receiving an authentication request that includes the second access control attribute, whether the first application server is authorized to hold the first user identifier to access the other services.

In a possible implementation, the processing unit is specifically configured to: receive a second authentication request from a second application server by using the transceiver unit, where the second authentication request is used to request to authenticate whether the first application server is authorized to hold the first user identifier, and the second authentication request includes the first user identifier.

According to a fifth aspect, a communication apparatus is provided. The communication apparatus includes a unit or a module configured to perform any method according to the second aspect. The communication apparatus may include a processing unit and a transceiver unit.

The processing unit sends a service subscription request to a first network element by using the transceiver unit, where the service subscription request is used to request to subscribe to a service, the service subscription request includes a service identifier, and the service identifier is used to indicate the service that a user requests to subscribe to; and the processing unit receives a service subscription response by using the transceiver unit, where the service subscription response is used to indicate that the service is successfully subscribed to, the service subscription response includes a first user identifier, the first user identifier is used to access the service, and the first user identifier is different from another first user identifier corresponding to another service that the user requests to access.

In a possible implementation, the service subscription request further includes a first access control attribute, the first access control attribute is used to indicate that the user authorizes the first application server to access other services on behalf of the user, and/or a scope in which the first application server is authorized to access the other services on behalf of the user, and the first application server is configured to process the service.

In a possible implementation, the service subscription request includes a user identity attribute, and the user identity attribute is used to indicate an identity type used by the user to request to subscribe to the service.

In a possible implementation, the processing unit is specifically configured to: send a service access request to the first application server by using the transceiver unit, where the service access request is used to request to access the service, and the service access request includes the first user identifier.

In a possible implementation, the service access request includes a second access control attribute obtained from the service subscription response, and the second access control attribute is used to indicate whether the first application server accepts holding the first user identifier to access the other services, and/or a scope in which the first application server accepts accessing the other services.

In a possible implementation, the service access request includes a validity period obtained from the service subscription response, and the validity period is used to determine whether the first user identifier is valid.

In a possible implementation, the processing unit is specifically configured to: send a third request to the first network element by using the transceiver unit, where the third request is used to request to renew the service, and the third request includes the first user identifier; and receive a third response sent by the first network element, where the third response is used to indicate whether renewal of the third-party service succeeds, and the third response includes the first user identifier whose validity period has been updated.

In a possible implementation, the sending the third request to the first network element includes: determining, based on the validity period, that the first user identifier is about to expire, and sending the third request before the first user identifier expires.

According to a sixth aspect, a communication apparatus is provided. The communication apparatus includes a unit or a module configured to perform any method according to the third aspect. The communication apparatus may include a processing unit and a transceiver unit.

The processing unit receives a service access request by using the transceiver unit, where the service access request includes a first user identifier, the first user identifier is used to access a service, and the first user identifier is different from another first user identifier corresponding to another service that the user requests to access; and the processing unit sends an authentication request to the first network element by using the transceiver unit, where the authentication request is used to request the first network element to authenticate the first user identifier, the first user identifier is generated by the first network element, and the authentication request includes the first user identifier.

In a possible implementation, the first user identifier includes a first digital signature, and the first digital signature is used to authenticate whether the first user identifier is valid.

In a possible implementation, the service access request includes a validity period corresponding to the first user identifier, the validity period is used to indicate a period in which the first user identifier is valid, and the first user identifier is unavailable when the validity period expires.

In a possible implementation, the service access request includes an access control attribute, the access control attribute is used to indicate whether a first application server accepts holding the first user identifier to access other services, and/or a scope in which the first application server accepts accessing the other services, and the first application server is configured to process the service.

In a possible implementation, the authentication request further includes the access control attribute, and the access control attribute is used to determine whether the first application server is authorized to hold the first user identifier to access the other services.

In a possible implementation, the authentication request further includes a second digital signature, the second digital signature is created by the user, and the second digital signature is used to authenticate whether the first user identifier is valid.

In a possible implementation, the authentication request further includes replay attack authentication information corresponding to the first user identifier, and the replay attack authentication information is used to authenticate whether the user holding the first user identifier is an authorized user.

In a possible implementation, the authentication request further includes the validity period, where the validity period is used to determine whether the first application server holds the valid first user identifier to access the service.

In a possible implementation, the processing unit is specifically configured to: receive an authentication response from the first network element by using the transceiver unit, where the authentication response is used to indicate that authentication of the first user identifier succeeds.

In a possible implementation, the processing unit is specifically configured to: send the service access request to a second application server by using the transceiver unit, where the service access request is used to request to access the other services, and the second application server is configured to process the other services.

According to a seventh aspect, a communication system is provided, including an identity management network element, a terminal device, and an application server, where the identity management network element is configured to implement any method according to the first aspect, the terminal device is configured to implement any method according to the second aspect, and the application server is configured to implement any method according to the third aspect.

According to an eighth aspect, a readable storage medium is provided. The readable storage medium stores a program. When the program is executed by a communication apparatus, any method according to the first aspect, or any method according to the second aspect, or any method according to the third aspect is implemented.

According to a ninth aspect, a chip system is provided, including: a memory, configured to store a computer program; and a processor, where after the processor invokes the computer program from the memory and runs the computer program, a communication apparatus in which the chip system is installed is caused to perform any method according to the first aspect, or perform any method according to the second aspect, or perform any method according to the third aspect.

According to a tenth aspect, a computer program product is provided. The computer program product includes an instruction, and when the instruction runs on a processor, the processor is caused to perform any method according to the first aspect, or perform any method according to the second aspect, or perform any method according to the third aspect.

### BRIEF DESCRIPTION OF DRAWINGS

FIG. 1 is a diagram of an architecture of a communication system to which an embodiment of this application is applied;
FIG. 2 is a schematic flowchart of a service subscription method according to an embodiment of this application;
FIG. 3 is a schematic flowchart of a service subscription method according to an embodiment of this application;
FIG. 4 is a schematic flowchart of a service subscription method according to an embodiment of this application;
FIG. 5 is a schematic flowchart of a service access method according to an embodiment of this application;
FIG. 6 is a schematic flowchart of a service access method according to an embodiment of this application;
FIG. 7 is a schematic flowchart of a service renewal method according to an embodiment of this application;
FIG. 8 is a possible example block diagram of an apparatus involved in an embodiment of this application; and
FIG. 9 is a possible diagram of a structure of an apparatus involved in an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, for example, a fifth generation (5th generation, 5G) communication system (or referred to as a new radio (new radio, NR) system), a fourth generation (4th generation, 4G) communication system (or referred to as a long-term evolution (long-term evolution, LTE) system), an LTE frequency division duplex (frequency division duplex, FDD) system, and an LTE time division duplex (time division duplex, TDD) system. The technical solutions provided in this application may be further applied to a future communication system, for example, a sixth generation (6th generation, 6G) mobile communication system.

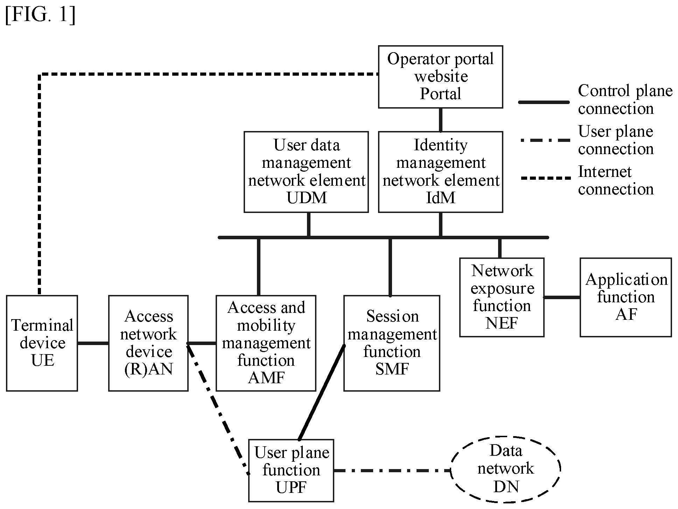

To prevent user privacy from being leaked when a user subscribes to or accesses a third-party service, this application provides a service processing method. The service processing method is applicable to a communication system 100 described in FIG. 1.

The communication system shown in FIG. 1 includes the following network elements: an identity management network element (Identifier Management, IdM), an access and mobility management function network element (access and mobility management function, AMF), a session management function (session management function, SMF), a unified data function (unified data function, UDM), a user plane function (user plane function, UPF), a wireless network device (for example, a (Radio) Access Network, (R)AN), a terminal device, and an application server (or an application function Application Function, AF). The communication system may further include a portal website of an operator.

The following describes the foregoing devices or network elements separately.
(1) Identity management network element: The identity management network element is a network element newly defined in the present invention. A function of the identity management network element is mainly used to authenticate a real identity of a user, and issue, to the user, a digital identity credential, which is alternatively referred to as a digital identity identifier (in this application, the two are referred to as a first user identifier). The digital identity credential or the digital identity identifier is used to identify a digital identity of the user. The digital identity credential or the digital identity identifier is a unique identifier with a security mode, so that the user can be uniquely identified. The digital identity credential or the digital identity identifier may be used to authenticate the digital identity of the user. The identity management network element may be an independent network function NF (Network Function), or may be a part of a UDM network function. A name of the identity management network element is not limited in this application. In an implementation process, a network element or a network function with another name may also perform a function of the identity management network element.
(2) User data management network element: It stores and manages network and service subscription data of a user terminal. In a 5G communication system, a user data management network element may be unified data management UDM (unified data management).
(3) Access and mobility management network element: It is mainly used for registration, mobility management, and tracking area update procedures of a terminal in a mobile network. The access and mobility management network element terminates a non-access stratum (non-access stratum, NAS) message, completes registration management, connection management, accessibility management, tracking area list (tracking area list, TA list) allocation, mobility management, and the like, and transparently routes a session management (session management, SM) message to a session management network element. In the 5th generation (5th generation, 5G) communication system, the access and mobility management network element may be an access and mobility management function (access and mobility management function, AMF).
(4) Session management network element: It is mainly used for session management in a mobile network, such as session establishment, modification, and release. A specific function is, for example, allocating an internet protocol (internet protocol, IP) address to the terminal or selecting a user plane network element that provides a packet forwarding function. In the 5G communication system, the session management network element may be a session management function (session management function, SMF).
(5) User plane function network element: It is mainly responsible for processing, for example, forwarding or charging a user packet. The user plane network element may also include a protocol data unit (protocol data unit, PDU) session anchor (PDU session anchor, PSA). In the 5G communication system, the user plane network element may be a user plane function (user plane function, UPF).
(6) Terminal device: The terminal device may be any device that can access a network, and may also be referred to as user equipment (user equipment, UE, which may be referred to as UE below for ease of description), a terminal apparatus, an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a user with voice/data connectivity, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile Internet device (mobile internet device, MID), a virtual reality (virtual reality, VR) device, an augmented reality (Augmented Reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 4G/5G network, or a terminal device in a future evolved public land mobile network (public land mobile network, PLMN). A specific technology, a device form, and a name that are used by the terminal device are not limited in embodiments of this application.
(7) Access network device (R)AN: It is configured to be responsible for wireless side access of a terminal device. Possible deployment forms include a separate scenario of a central unit (central unit, CU) and a distributed unit (distributed unit, DU), and a single-site scenario. In the separate scenario, the CU supports protocols such as a radio resource control (radio resource control, RRC), a packet data convergence protocol (packet data convergence protocol, PDCP), and a service data adaptation protocol (service data adaptation protocol, SDAP). The DU mainly supports a radio link control (radio link control, RLC) layer protocol, a media access control (media access control, MAC) layer protocol, and a physical layer protocol. In the single station scenario, a single station may include a (new radio Node, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, a baseband unit (baseband unit, BBU), and the like.
(8) Application function (Application function, AF) or application server: It is a network element or server served by a third-party service provider (service provider, SP). The application function may be connected to a control plane of an operator network for communication by using a network exposure function (Network Exposure Function, NEF). The application server is generally located on the Internet or another data network DN (Data Network). A user terminal is connected to the application server through a user plane to provide a third-party service for a user.
(9) Network exposure function: It is located between a core network and the AF and is responsible for managing exposed network data. The AF accesses internal data of the core network through the NEF. For example, the IdM may communicate with the AF or the application server through the NEF. The NEF provides security assurance to ensure security from an external application to a 3GPP network, and provides functions such as QoS customization capability exposure for an external application, mobility status event subscription, and AF request distribution.
(10) Operator portal: It is a service management website or server established by an operator. A user can access, through a mobile network or the Internet, the operator portal, which is alternatively referred to as an operator portal, to subscribe to or unsubscribe from a service provided by the operator, and view a service package, charging information, account information, and the like. A third-party SP that has a partnership with the operator also displays a service provided by the third-party SP on the operator Portal for a user to subscribe. In the present invention, the user may also connect to the operator Portal through the Internet, and request the IdM to issue a digital identity identifier to the user.
(11) Data network: It is a network that provides a service such as Internet access, an operator service, or a third-party service.

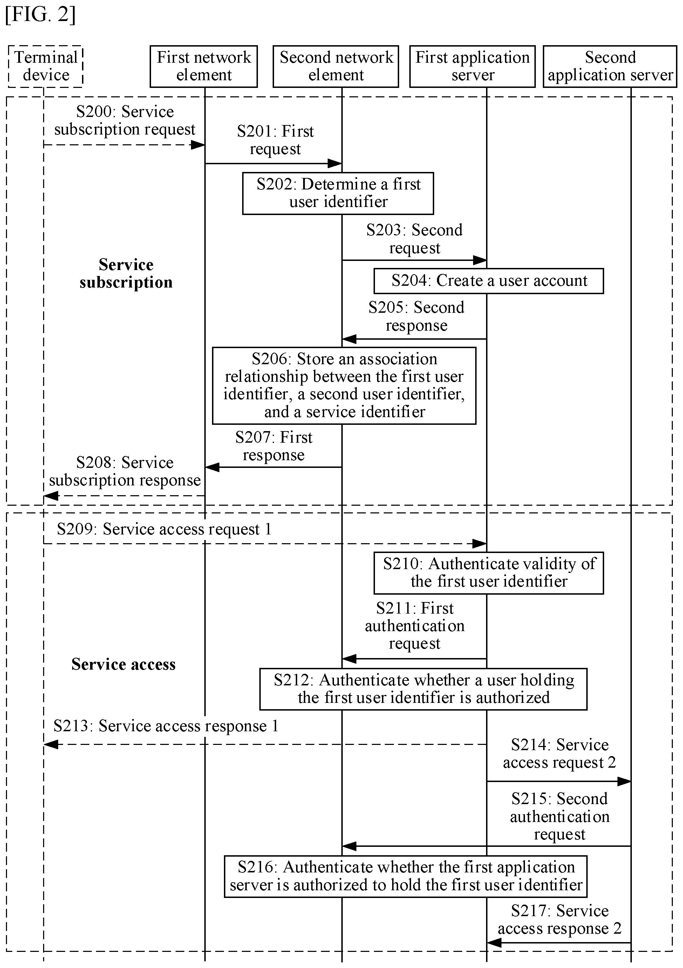

FIG. 2 is a schematic flowchart of a service subscription and access method according to an embodiment of this application. The following describes an implementation process of this embodiment with reference to FIG. 2.

S201: A first network element sends a first request to a second network element.

For example, the first network element may be an access and mobility management network element, for example, an AMF in FIG. 1, and the second network element may be an identity management network element, for example, an IdM in FIG. 1.

The first request is used to request to subscribe to a service. For example, the service may be a third-party service, and the third-party service may be provided by a network function or an application server other than an operator network, for example, an AF in FIG. 1. In this embodiment, the network function or the application server that provides the service is referred to as a first network function or a first application server. For ease of description, the two are collectively referred to as the first application server. Optionally, the first request is used to request to create a first user identifier, and the first user identifier may also be referred to as a digital identity credential or a digital identity identifier. The first user identifier is used to identify a user. In the present invention, the user subscribes to and accesses a service by using the first user identifier.

The first request includes a service identifier. The service identifier may be used to determine the service, or determine the application server corresponding to the service. For example, the first network element or the second network element may determine, based on the service identifier, the first application server corresponding to the service. For example, the service identifier may be an application identifier (Application Identifier, APP ID), may be a domain name or an IP address of the first application server, or may be a uniform resource locator (Uniform Resource Locator, URL) of the first application server. A specific form of the service identifier is not limited in the present invention.

Optionally, the first request further includes a second user identifier, and the second user identifier may be a user number, for example, a mobile number, or the second user identifier may be a subscriber permanent identifier (subscriber permanent identifier, SUPI). The subscriber permanent identifier SUPI may be used to identify the user, and a subscriber identity module (subscriber identity module, SIM) or a user identity module (user identity module, UIM) is a physical carrier of the subscriber permanent identifier SUPI. After inserting the SIM/UIM into a terminal device, the user can use the SUPI to pass authentication by a network and then access the network normally.

It should be noted that the first request may carry the mobile number, the subscriber permanent identifier SUPI, or both.

Optionally, before step S201, in step S200, the terminal device may send a service subscription request to the first network element. The service subscription request includes the service identifier.

It should be noted that the first network element may alternatively be an operator Portal, for example, a Portal in FIG. 1. If the first network element is an operator Portal, optionally, the service subscription request may include the user number, for example, the phone number. The first request carries the user number.

S202: The second network element determines a first user identifier.

For example, when determining the first user identifier, the second network element may randomly generate a character string. For example, the character string may include one or more of a digit, a letter, or another special character. The character string can uniquely identify the user. To prevent the first application server from leaking user privacy, when the user requests to subscribe to different services, the second network element creates different first user identifiers for the user. For example, when the user requests to subscribe to a service #1 (or the first request carries a service identifier #1), the second network element creates a first user identifier #1 or a character string #1 for the user; and when the user requests to subscribe to a service #2 (or the first request carries a service identifier #2), the second network element creates a first user identifier #2 or a character string #2 for the user. The first user identifier #1 is different from the first user identifier #2, or the character string #1 is different from the character string #2.

In this implementation, different first user identifiers are used when the user subscribes to different services. Therefore, user privacy leakage can be avoided.

Optionally, the first user identifier may further include a first digital signature, where the first digital signature is generated by the second network element, and the first digital signature is used to authenticate that the first user identifier is allocated or issued by the second network element. For example, the digital signature may be generated by the second network element by using a private key, or may be generated by the second network element by using a key shared with the first application server.

Optionally, the first user identifier may further have one or more attributes. For example, the attribute may include a service identifier. The service identifier may be used to determine a service corresponding to the first user identifier.

Alternatively, optionally, the attribute may include a validity period of the first user identifier. The validity period is used to define a time range in which the first user identifier is available. For example, the validity period may be a time length. For example, the first user identifier becomes invalid after the time length is exceeded by using time at which the first user identifier is generated or received as a reference; or the validity period may be a time point, and the first user identifier becomes invalid after the time point is exceeded.

Optionally, it may be further ensured that the first user identifier corresponds to a unique citizen. For example, if a national regulation requires that a citizen subscribe to a service in real name, the second network element ensures that each first user identifier corresponds to a unique citizen. For example, when an operator issues a SIM or UIM card to a user, the operator authenticates a citizen ID card of the user to cause the SUPI or phone number to correspond to a real citizen.

S203: The second network element sends a second request to a first application server.

The second request includes the first user identifier. The second request is used to request to subscribe to a service from the first application server.

Optionally, if the first user identifier includes the first digital signature, and the first digital signature is generated by the second network element by using a private key, the second request may further include a public key corresponding to the first digital signature of the first user identifier, and the public key corresponds to the private key used by the second network element to generate the first digital signature for the first user identifier in S202. The public key may be used to authenticate the first digital signature of the first user identifier.

Optionally, the second request may further include a service identifier.

S204: The first application server creates, for a user, a user account used to access a service.

For example, the first application server authenticates the first digital signature included in the first user identifier. For example, if the second network element generates the first digital signature of the first user identifier by using a shared key in S202, the first application server performs authentication by using a key pre-shared with the first digital second network element; or if the second network element generates the first digital signature of the first user identifier by using a private key in S202, the first application server authenticates the first digital signature by using a public key corresponding to the private key. For example, the public key may be obtained by the first application server from a public key certificate of the second network element, or may be carried in the second request in S203.

If the authentication of the first digital signature succeeds, an account is created for the user. For example, a character string that can uniquely identify the user in the first user identifier is used as an account for the user to access a service.

S205: The first application server sends a second response to the second network element.

The second response is used to indicate whether the subscription succeeds. For example, the second response includes indication information, and the indication information indicates whether the subscription succeeds. For example, the indication information may be one bit. If the second response carries a bit 1 or true, it indicates that the service subscription succeeds. Otherwise, if the second response carries 0 or false, or carries no value, it indicates that the service subscription fails.

Optionally, the second response further includes the first user identifier.

Optionally, if the second request in S203 includes a service identifier, the second response may further include the service identifier.

S206: The second network element stores an association relationship between the first user identifier, a second user identifier, and a service identifier.

In a first implementation, when the association relationship is stored, the first user identifier may be used as a query manner. For example, the stored association relationship between the first user identifier, the second user identifier, and the service identifier may be found by querying the first user identifier. Because the first user identifier is unique, the association relationship may be found in this manner. For example, when the association relationship is used to authenticate validity of the first user identifier, whether the second network element stores a storage record corresponding to the association relationship is queried based on the first user identifier, and whether the service identifier in the storage record corresponds to the first application server is authenticated. If the service identifier corresponds to the first application server, it is considered that the validation of the first user identifier succeeds.

In a second implementation, when the association relationship is stored, the first user identifier and the service identifier may be used as a query manner. For example, the stored association relationship between the first user identifier, the second user identifier, and the service identifier may be found by querying the first user identifier and the service identifier. For example, when the association relationship is used to authenticate validity of the first user identifier, whether the service identifier corresponds to the first application server may be authenticated first. If the service identifier corresponds to the first application server, whether the second network element stores a storage record corresponding to the association relationship is queried by using the first user identifier or by using the first user identifier and the service identifier. If the association relationship is stored, it is considered that the validation of the first user identifier succeeds. Optionally, when the association relationship is stored, attribute information corresponding to the first identifier may be further stored. For example, the attribute information may include a validity period attribute.

It should be noted that this step is an optional step.

In addition, if step S206 is performed, S206 may be combined with S202. That is, when creating the first user identifier, the second network element may store the association relationship between the first user identifier, the service identifier, and the second user identifier.

S207: The second network element sends a first response to the first network element.

The first response is used to indicate whether the subscription succeeds. For example, indication information may indicate whether the service that the user requests to subscribe to is successfully subscribed to. The first response further includes the first user identifier.

Optionally, the first response further includes the service identifier.

Optionally, the first response further includes the second user identifier.

If the first network element is an AMF, the first request in S201 may carry an SUPI, a user number, or both. For example, if the SUPI is carried in S201, in this case, the first response also carries the SUPI. The AMF may find, based on the SUPI, a terminal device corresponding to the user, and send a service subscription response to the corresponding terminal device. If the user number is carried in S201, in this case, the first response carries the user number, and the AMF may also find a terminal device corresponding to the user by searching for the SUPI based on the user number. If the SUPI and the user number are carried in S201, in this case, the first response may carry the SUPI, or may carry the user number. If the user number is carried, the AMF may search for the SUPI based on the user number.

If the first network element is an operator Portal, the first request in S201 may carry the user number, and in this case, the first response also carries the user number.

Optionally, the first network element may send a service subscription response to the terminal device, as shown in S208 in FIG. 2. The service subscription response is used to indicate whether the service subscription succeeds, and the service subscription response further includes the first user identifier.

The foregoing steps describe a service subscription process. The second network element generates, for different services that the user is about to request to access, different first user identifiers that can uniquely identify the user. Because the user uses different first user identifiers when subscribing to different services, the first application server cannot obtain subscription records of other services of the user, thereby avoiding privacy leakage.

The following describes a process in which the user accesses a service based on the first user identifier.

S209: The first application server receives a service access request 1.

For example, the service access request 1 is sent by the terminal device, and the service access request 1 includes the first user identifier.

Optionally, the first user identifier may include the first digital signature generated by the second network element in S202.

Optionally, the service access request 1 may include a public key certificate corresponding to the first digital signature of the first user identifier. The public key is used by the network to subsequently authenticate validity of the first user identifier.

Optionally, the service access request 1 may further include a second digital signature generated by the terminal device for the first user identifier. The terminal device may perform, by using a private key (that is, a private key corresponding to the first user identifier) issued by the second network element to the user, digital signature on the service access request 1 including the first user identifier, that is, generate the second digital signature. For example, the second network element generates the private key and the public key corresponding to the private key for the user. The second network element issues the private key to the user, for example, the private key may be encrypted and transmitted through an Internet protocol security (Internet protocol security, IPsec) tunnel. The public key may be reserved by the second network element, and is used to authenticate the second digital signature generated by using the private key.

Optionally, the service access request 1 may further include replay attack authentication information. For example, the replay attack authentication information may be a timestamp, and the timestamp may correspond to time when the user or the terminal device initiates an access request or performs digital signature. Alternatively, the replay attack authentication information may be a random number, and a random number is generated when the user or the terminal device initiates service access. The second digital signature, for the service access request 1 including the replay attack authentication information, generated by using the private key corresponding to the first user identifier is used to ensure that the service access request 1 is valid for one time, that is, after an access request of an authorized user, even if an unauthorized user obtains a first user identifier of the user in an access request message, the unauthorized user still cannot access a service provided by the first application server.

Optionally, the service access request 1 may include validity period information of the first user identifier, and the validity period information may be used to indicate a period in which the first user identifier is valid. Alternatively, the validity period information may be used to indicate that the first user identifier has a corresponding validity period, and the terminal device indicates, by using the validity period information, the network to authenticate the validity period of the first user identifier.

Optionally, the service access request 1 may include indication information, where the indication information indicates the network to authenticate the validity period of the first user identifier.

When the service access request 1 includes the validity period of the first user identifier, or includes indication information indicating the network to authenticate the validity period of the first user identifier, the network needs to authenticate the validity period of the first user identifier in a subsequent service access process.

S210: The first application server authenticates validity of the first user identifier.

For example, the first application server authenticates a subscription record of the user. For example, the first application server uses the first user identifier to search for a service subscription record of the user, for example, uses a character string that can uniquely identify the user in the first user identifier as a user account to search for a subscription record. If a subscription record of the user can be found, it is considered that the user performs subscription by using the first user identifier, and a subsequent authentication process continues to be performed, that is, the first user identifier of the user continues to be authenticated. If no subscription record is found, the service access request is rejected, and the first user identifier does not need to continue to be authenticated.

For example, the first application server authenticates the first user identifier of the user. Authentication methods of the first application server are different based on different content included in the first user identifier.

If the first user identifier includes a character string used to identify the user, for example, includes only the character string, the first application server only needs to authenticate the foregoing subscription record of the user, and does not need to additionally authenticate the first user identifier.

If the service access request 1 includes an attribute (for example, a validity period) corresponding to the first user identifier, for example, the validity period indicates a period in which the first user identifier is valid, the first application server authenticates the validity period of the first identifier. For example, the first application server determines whether current time or time at which a service access request is received falls within a time range indicated by the validity period corresponding to the first user identifier. If the foregoing time falls within the time range indicated by the validity period corresponding to the first user identifier, it is considered that the authentication of the validity period succeeds; otherwise, the authentication fails, and it is determined that the first user identifier is invalid.

If the first user identifier includes the first digital signature, where the first digital signature is generated by the second network element, and further, if the shared key is preconfigured between the second network element and the first application server, or the first application server obtains the public key certificate of the second network element, the first application server may authenticate the first user identifier by using the public key or the shared key, to determine whether the first user identifier is generated by the authorized second network element. For example, in a process in which the second network element generates the first user identifier, the second network element generates, by using the shared key, the first digital signature corresponding to the first user identifier. In this case, the second network element may preconfigure the shared key for the first application server. For example, the first application server may obtain the foregoing public key certificate from the service access request 1. For example, the service access request 1 carries the public key certificate of the first digital signature corresponding to the first user identifier.

In the foregoing case, the first application server may authenticate the first user identifier. In some other cases, the first application server requests the second network element to authenticate the first user identifier (for example, perform authentication by performing subsequent step S211).

For example, if the operator performs entrusted deduction on the service that the user requests to access, an authentication request may be sent to the second network element, to request the second network element to authenticate the first user identifier. For example, in the foregoing scenario, the first user identifier includes a character string used to identify the user, or the first user identifier includes the first digital signature. If the operator performs entrusted deduction on the service, the first application server requests the second network element to authenticate the first user identifier.

If the service access request 1 includes validity period information, the first application server may also request the second network element to authenticate the first user identifier. For example, the validity period carried in the service access request 1 may be tampered with or untrusted. To ensure accuracy of the authentication, the first application server may request the second network element to authenticate the validity period of the first identifier. Alternatively, if the validity period information carried in the service access request 1 is only indication information for requesting to authenticate a validity period, the first application server cannot obtain a specific validity period, and therefore cannot perform authentication. In this case, the first application server requests the second network element to authenticate the validity period of the first identifier.

If the service access request 1 includes the second digital signature, the first application server requests the second network element to authenticate whether the user holding the first identifier is authorized. For details, refer to step S212. The second digital signature is generated by the terminal device. When generating the second digital signature, the terminal device uses the private key issued by the second network element to the terminal device. The second network element holds the public key for authenticating the second digital signature, while the first application server does not hold the public key. Therefore, in this case, the first application server requests the second network element to validate the user that holds the first user identifier.

S211: The first application server sends a first authentication request to the second network element.

The first authentication request is used to request the second network element to authenticate the first user identifier, and the first authentication request includes the first user identifier.

Optionally, the first user identifier may include the first digital signature.

Optionally, the first authentication request may include the second digital signature generated by the terminal device corresponding to the first user identifier. Optionally, the first authentication request may further include the replay attack authentication information.

Optionally, the first authentication request may include the service identifier.

S212: The second network element authenticates whether the user holding the first user identifier is authorized.

Authentication methods of the second network element are different based on different content included in the first user identifier.

In a first case, the first user identifier includes a character string used to identify the user, for example, includes only the character string. For example, after receiving the first authentication request, the second network element determines the first user identifier, and then searches for the association relationship between the first user identifier, the service identifier, and the second user identifier that is stored in S202 or S206, to authenticate that the user holding the first user identifier is an authorized user. For example, if the second network element finds the association relationship between the first user identifier, the service identifier, and the second user identifier by using the first user identifier or using the second user identifier and the service identifier, it is considered that the authentication of the first user identifier succeeds.

In a second case, the service access request 1 includes an attribute (for example, validity period information) corresponding to the first user identifier. For example, the validity period information indicates a period in which the first user identifier is valid. Alternatively, the validity period information may be used to indicate that the first user identifier has a corresponding validity period, and the terminal device indicates, by using the validity period information, the network to authenticate the validity period of the first user identifier. Alternatively, the validity period information carried in the service access request 1 is only indication information for requesting to authenticate a validity period. In this case, the second network element searches for a stored validity period corresponding to the first user identifier, and authenticates, based on the validity period stored in the second network element, whether the first user identifier is valid. For example, if a moment at which the second network element receives the authentication request falls within the validity period of the first user identifier, it is considered that the authentication of the validity period of the first user identifier succeeds. If the validity period attribute carried in the service access request 1 is only indication information for requesting to authenticate a validity period, the second network element searches for the corresponding validity period of the first user identifier. If the validity period information carried in the service access request 1 indicates a period in which the first user identifier is valid, the second network element may directly use the validity period, or may search for the corresponding validity period of the first user identifier. The validity period carried in the authentication request may be tampered with. Therefore, to ensure accuracy of the authentication of the validity period, the second network element may search for a validity period buffered in the second network element, and perform authentication based on the found validity period.

In a third case, the first user identifier includes the first digital signature. The second network element authenticates the first user identifier based on the public key corresponding to the digital signature or the shared key. If the authentication succeeds, it is determined that the first user identifier is issued or created by the second network element.

In a fourth case, the first authentication request further includes the second digital signature of the first user identifier. The second network element authenticates the second digital signature by using the public key in the public key certificate of the user. If the second network element successfully authenticates the second digital signature by using the public key, it may be determined that the user holding the first user identifier is an authorized user. Further, if the first authentication request further carries the replay attack authentication information, the second network element authenticates the replay attack authentication information. For example, the replay attack information may be a timestamp, and the second network element authenticates the timestamp. For example, if the second network element determines that a service request message 1 carrying the timestamp undergoes first authentication, it is considered that the authentication succeeds. Optionally, in addition to the first authentication, the following condition needs to be met: Only if a time interval between time corresponding to the timestamp and authentication time is less than a first threshold, it can be considered that the authentication succeeds. For example, the first threshold may be a preset value. For example, time indicated by a timestamp field of an identity identifier of the user is 00:00:00 on December 28, 2023, time at which the second network element performs authentication is 01:00:00 on December 28, 2023, a preset threshold is 10 minutes, and a time interval is greater than the preset threshold. Therefore, authentication fails. Alternatively, if the second network element authenticates the service request message 1 with the same timestamp before this authentication, it is considered that the service request message 1 of this authentication is initiated by an unauthorized user, or the user is under a replay attack. Therefore, it may be determined that the validation of the first user fails. It should be noted that the first authentication means that the second network element has not previously authenticated the service request message 1 carrying the first user identifier, or that the second network element has not previously authenticated the service request message 1 carrying the first user identifier and the corresponding timestamp. After each authentication, the second network element stores the service request message 1 carrying the first user identifier and the corresponding timestamp that are authenticated this time. If the timestamp corresponding to the service request message 1 carrying the first user identifier in this authentication is the same as the timestamp of the service request message 1 carrying the first user identifier and stored previously in the second network element, it is considered that the authentication fails.

The second network element sends an authentication result to the first application server. For example, S212 may further include a step of sending, by the second network element, an authentication request response to the first application server. For example, the authentication request response may include indication information indicating whether the user validation succeeds, for example, may be 1-bit indication information.

Optionally, if the authentication fails, a reason for the authentication failure may be further indicated, for example, a reason that the second network element has not found the association relationship between the first user identifier, the service identifier, and the second user identifier, a reason that the authentication of the validity period fails, a reason that the first user identifier is not issued by the second network element, a reason that the second digital signature is not generated by the terminal device (or the authentication of the second digital signature fails), or a reason that the replay attack authentication fails.

Optionally, before the second network element performs the authentication in the third case and/or the fourth case, the association relationship between the first user identifier, the second user identifier, and the service identifier may be first authenticated. For example, if the authentication of the association relationship succeeds, the authentication of the digital signature in the third case and the fourth case is further performed; otherwise, the authentication of the digital signature in the third case and the fourth case is not performed, and it is determined that the authentication fails. For example, for an authentication method for the association relationship between the first user identifier, the second user identifier, and the service identifier, refer to S206.

It should be noted that the foregoing second case to fourth case are not mutually exclusive, and the second network element may perform one, several, or all of the authentication processes.

Optionally, the first application server may send a service access response 1 to the terminal device, for example, step S213 in FIG. 2. The service access response 1 is used to indicate whether the first application server accepts the service access request of the terminal device.

For example, if it is authenticated that the user holding the first user identifier is authorized, the first application server may determine to accept the service access request 1 of the user; otherwise, the first application server rejects the service access request 1 of the user. It should be noted that, if the authentication of the subscription record of the user by the first application server fails, the service access request 1 of the user is rejected.

In this embodiment, the first application server obtains only the first user identifier generated by the second network element for the user. In addition, the second network element generates different first user identifiers when the user accesses different services. In addition, the first application server does not obtain the user number, and does not obtain an association relationship between the first user identifier and the user number either. Therefore, the first application server cannot obtain personal privacy information such as a user phone number, thereby avoiding privacy leakage.

In another scenario, a same user subscribes to or accesses a service by using different identity attributes, and to prevent privacy leakage between different identity attributes of the user, the second network element creates different first user identifiers based on different identity attributes of the user when creating a first user identifier for the user. The following describes steps of the implementation solution.

Correspondingly, in another implementation, the first request in step S201 further includes a user identity attribute.

The user identity attribute is used to indicate an identity type used by the user to request to subscribe to a service. For example, the identity attribute includes a personal identity attribute or a workplace identity attribute. The personal identity attribute indicates that the user subscribes to or accesses a service with a personal identity, for example, for a personal entertainment or learning purpose. The workplace identity attribute indicates that the user subscribes to or accesses a service with a workplace identity attribute, for example, for a working purpose. When a user subscribes to or accesses a service with different identity attributes, the first application server may process the user as different users. That is, subscription or access behaviors of different identity attributes of the user are independent of each other. It should be noted that the personal identity attribute and the workplace identity attribute are merely examples of the user identity attribute, and are not limited to the two types. The user may also have other user identity attributes.

Correspondingly, based on the foregoing steps S202 to S212, the following actions may be added:
In step S202, the second network element creates the first user identifier. For example, the second network element creates different first user identifiers based on different identity attributes of the user when creating a first user identifier for the user. For example, when the user requests to subscribe to a service with a personal identity attribute, the second network element creates a first user identifier #1 for the user; and when the user requests to subscribe to a same service with a workplace identity attribute, the second network element creates a first user identifier #2 for the user, where the first user identifier #1 is different from the first user identifier #2. Optionally, the attribute information corresponding to the first user identifier may include the user identity attribute.
In step S203, optionally, the second request may further include the user identity attribute.
In step S205, optionally, the second response may further include the user identity attribute.
In step S206, optionally, the second network element may further store an association relationship between the user identity attribute, the first user identifier, the second user identifier, and the service identifier. Correspondingly, the association relationship may also use the first user identifier, the service identifier, and the user identity attribute as a query manner. For example, the stored association relationship may be found through the first user identifier, the service identifier, and the user identity attribute.
In step S207, optionally, the first response may further include the user identity attribute.
In step S209, optionally, the service access request 1 may further include the user identity attribute.
In step S211, optionally, the first authentication request may further include the user identity attribute.

In this implementation, the user may subscribe to a same service for multiple times by using different identity attributes, and the second network element may generate and deliver different first user identifiers for different identity attributes of the same user, thereby ensuring that privacy of the user accessing the service by using different identities is not leaked.

In another scenario, the user may authorize, by using an access control attribute, the first application server to hold the first user identifier to access other services. The following describes steps of this embodiment.

Correspondingly, in an implementation, the first request in step S201 further includes a first access control attribute.

The first access control attribute is used to indicate whether the first application server is allowed to access other services on behalf of the user, for example, whether the first application server is allowed to access, on behalf of the user, other services different from the service that the user requests to subscribe to. These other services may be services provided by an operator, or may be services provided by a network or an application server other than an operator. Optionally, the first access control attribute may further include a scope in which the first application server is allowed to access other services on behalf of the user. For example, the first access control attribute may be a service list, for example, may be an APP list, or may be a domain name list or an IP address list of the first application server. The list provides a service that the first application server is authorized by the user to hold the first user identifier to access. Alternatively, further, the first access control attribute further includes a task that can be executed when each service is accessed.

For example, the service requested to be subscribed to may be a smart assistant, and the smart assistant may be a service in the foregoing service list. The smart assistant may help the user process a call service (for example, answering or making a call), where the answering or making a call is a task that can be executed by the smart assistant. For example, the first control attribute may further indicate a range of calls that the smart assistant is allowed to automatically make or automatically answer. The range may be a time range, for example, a time period in which the smart assistant is allowed to answer or make a call, or may be a number range, for example, phone numbers of calls that the smart assistant is allowed to answer or make.

Correspondingly, based on the foregoing steps S202 to S207, the following actions may be added:
In step S202, the attribute of the first user identifier may further include the first access control attribute in step S201.
In step S203, the second request may further include the first access control attribute in step S201. The first access control attribute is used to notify the first application server of services that the user authorizes the first application server to hold the first user identifier to access on behalf of the user.
In step S205, the second response may further include a second access control attribute. For example, when receiving the first access control attribute carried in the second request, the first application server may further determine whether the first application server accepts or partially accepts a range, which is indicated by the first access control attribute, of services to be accessed on behalf of the user. For example, the first application server may accept all of the first access control attribute. In this case, the second access control attribute is the same as the first access control attribute. Alternatively, the first application server accepts only a part of services indicated by the first access control attribute. For example, the first application server accepts only a part of services in the service list indicated by the first access control attribute, and the part of services constitute the second access control attribute.
In step S206, when storing the association relationship between the first user identifier, the second user identifier, and the service identifier, the second network element may further store the second access control attribute corresponding to the first user identifier.
In step S207, the first response may further include the second access control attribute.

It should be noted that, if the user requests the first application server to hold the first user identifier to access other services, the service access request 1 in S209 may include an access control attribute. For example, the second application server provides or processes the other services, and the first application server may hold the first user identifier of the user to initiate a communication request to the second application server. The following describes a process in which the user requests the first application server to hold the first user identifier to access other services.

Correspondingly, the following actions are added to steps S209 to S213 in the service access process:
In step S209, the service access request 1 may further include the second access control attribute.
In step S211, the first authentication request may further include the second access control attribute.
In step S212, in addition to authenticating whether the first user identifier is held by an authorized user, the second network element further needs to authenticate whether the second access control attribute carried by the terminal device in the service access request 1 is correct. For example, the user may carry an invalid second access control attribute in the service access request 1, that is, the second access control attribute carried in the service access request 1 is different from the second access control attribute delivered by the network to the user (for example, the second access control attribute carried in S208). For example, the user attempts to expand a scope in which the first application server is authorized to hold the first user identifier to access other services on behalf of the user. In this case, to ensure that the other services that the user requests the first application server to access on behalf of the user is accepted by the first application server in the subscription process, the second network element authenticates the second access control attribute included in the first authentication request.

For example, the second network element stores the association relationship between the first user identifier, the second user identifier, and the service identifier in S206 (or S202), and the association relationship further includes the second access control attribute corresponding to the first identifier. The second network element finds the second access control attribute stored in the second network element, and if content indicated by the second access control attribute includes content indicated by the second access control attribute in the first authentication request, it is considered that the authentication of the second access control attribute succeeds. For example, the content indicated by the second access control attribute is the same as the content indicated by the second access control attribute in the first authentication request, or the content indicated by the second access control attribute includes the content indicated by the second access control attribute in the first authentication request.

For example, the corresponding authentication request response sent by the second network element to the first application server includes indication information indicating that the authentication of the second access control attribute succeeds. After receiving the indication information, the first application server may determine whether the other services that the terminal device requests to access is accepted by the first application server in the subscription process.

In another implementation, the second network element does not authenticate the second access control attribute carried in the first authentication request. After the terminal device indicates a specific service to be accessed by the first application server on behalf of the user, the terminal device authenticates validity of the accessed service. This implementation is described in subsequent steps.

It should be noted that, if the user requests the first application server to hold the first user identifier to access other services, the first application server needs to initiate a communication request to an application server that provides the other services. For example, in this embodiment, the application server that provides the other services becomes the second application server. After receiving the communication request from the first application server, the second application server authenticates validity of the first application server, that is, authenticates whether the first application server is authorized to hold the first user identifier. Therefore, after S213, the following steps need to be further performed.

Optionally, after S213, the terminal device sends indication information to the first application server, where the indication information indicates a service that the terminal device indicates the first application server to access. For example, the indication information indicates that the first application server provides a smart assistant service, and the terminal device indicates, in the indication information, a smart assistant to hold the first user identifier to register with an operator network, to answer or make a call, or indicates the smart assistant to log in to a website to perform a ticket booking operation. In this case, a telecommunication application server of the operator network or an application server that provides a ticket booking service may be referred to as the second application server.

S214: The first application server sends a service access request 2 to a second application server.

The service access request 2 includes the first user identifier. Optionally, the service access request 2 further includes information about the second access control attribute. For example, the second access control attribute indicates that the first application server may initiate a communication request to the second application server. For example, the user authorizes the first application server to hold the first user identifier to access the service #1. The service #1 is processed by the second application server, and the service #1 is a service in a service list indicated by the second access control attribute.

Optionally, the service access request 2 may further include a validity period attribute.

In this implementation, the first application server sets service logic of the first application server based on the second access control attribute in the first user identifier of the user. For example, the second application server provides a smart assistant service, and the second access control attribute is used to indicate that the user allows the first application server to access the operator network by using the first user identifier to perform a behavior of automatically making or automatically answering a call. For example, the first application server sends the service request 2 to the telecommunication application server (that is, the second application server) of the operator network, where the service access request 2 carries the first user identifier of the user, the first application server registers with the operator network by using the first user identifier, and waits for automatically answering a call, and the second access control attribute may further indicate a time period of answering or making a call by the first application server, or a phone number of answering or making a call by the first application server.

S215: The second application server sends a second authentication request to the second network element. For content included in the second authentication request, refer to the content in the first authentication request in step S211.

Optionally, the second authentication request may carry indication information in the service access request 2 in S214, and the indication information indicates a service that the terminal device indicates the first application server to access.

S216: The second network element authenticates whether the first application server is authorized to hold the first user identifier. For an authentication method, refer to step S212.

Optionally, as another authentication method, the second network element does not authenticate whether the second access control attribute carried in the first authentication request is valid in S212, but authenticates, in this step, whether the service that the terminal device indicates the first application server to access falls within a service scope indicated by the second access control attribute, or whether the service is in the list indicated by the second access control attribute. For example, the second network element finds the second access control attribute stored in the second network element. If the service that the terminal device indicates the first application server to access falls within the service scope indicated by the second access control attribute, it is considered that the service that the terminal device indicates the first application server to access is accepted by the first application server in the subscription process. Therefore, the authentication succeeds; otherwise, the authentication fails.

Similarly, the second network element sends an authentication result to the second application server. For example, the second network element sends a first user identifier authentication response message to the second application server. An identity authentication response message carries an identity authentication result. For example, the authentication result is a 1-bit indication, and 1 or true indicates that the identity authentication succeeds; otherwise, it indicates that the identity authentication fails.

S217: After receiving a result indicating that the authentication succeeds, the second application server sends a communication response to the first application server. For example, the communication response may be a communication response of accepting the initiation by the first application server, or may be a communication response of rejecting the initiation by the first application server.

In this embodiment, by setting an access control attribute for the first user identifier, whether to allow the first application server to use the first user identifier provided by the user to access other services is determined, thereby expanding a use range of the first user identifier. In addition, the user authorizes, by using the first access control attribute, the first application server to access the other services on behalf of the user, thereby improving user experience.

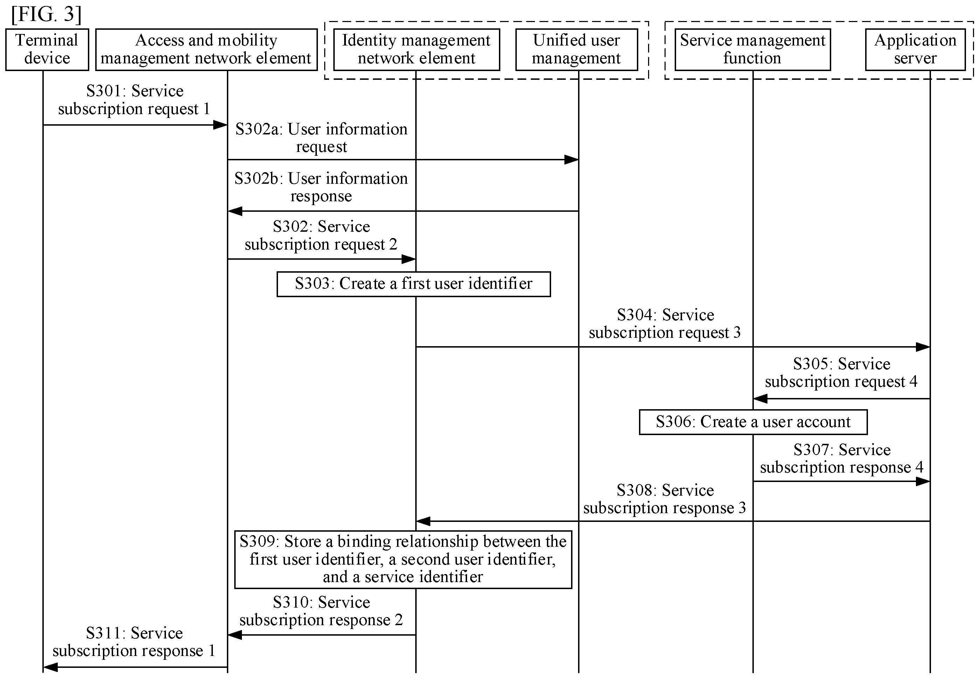

FIG. 3 is a schematic flowchart of a service subscription method according to an embodiment of this application. In the method, a terminal device initiates a service subscription request to an access and mobility management network element. The method includes the following steps.

S301: The terminal device sends a service subscription request 1 to the access and mobility management network element.

The service subscription request 1 is used to request to subscribe to a service, or in other words, the terminal device requests the access and mobility management network element to initiate a service subscription request. For example, the service may be a service provided by a network or an application server other than an operator, and the service may also be referred to as a third-party service. The service subscription request 1 includes a service identifier, where the service identifier may be used to determine a third-party service. For description of the service identifier, refer to step S201 in FIG. 2.

In an implementation, the terminal device sends the service subscription request 1 to the access and mobility management network element (for example, an AMF) by using a radio access network (for example, a Radio Access Network, RAN).

Optionally, before sending the service subscription request 1 to the access and mobility management network element, the terminal device has successfully registered with a mobile communication network of the operator. For example, the terminal device completes authentication of the terminal device by a mobile network through a service request (Service Request) procedure. The access and mobility management network element stores registration information of the terminal device, where the registration information includes context information of the terminal device, the context information of the terminal device includes a subscriber permanent identifier (Subscriber Permanent Identifier, SUPI) of the terminal device, and the SUPI is used to obtain a user number corresponding to the terminal device. The terminal device sends the service subscription request 1 after accessing a user network. For example, the terminal device receives promotion information of a service, and after a user presses a specified group of keys in sequence, the service subscription request is triggered.

Optionally, the service subscription request 1 may be included in a non-access stratum container (NAS Container).

S302: The access and mobility management network element sends a service subscription request 2 to an identity management network element.

The service subscription request 2 is used to request to subscribe to a service, or in other words, the access and mobility management network element requests the identity management network element to initiate a service subscription request, or in other words, the access and mobility management network element requests the identity management network element to create a first user identifier, where the first user identifier is a digital identity identifier or a digital identity credential of a user. The service subscription request 2 includes a service identifier. For description of the first user identifier, refer to step S202 in FIG. 2. For description of the service subscription request 2, refer to the first request in step S202 in FIG. 2.

It should be noted that the identity management network element may be a part of a unified data management network element. In other words, the identity management network element is not an independent network element, and a network function of the identity management network element is carried in the unified data management network element (UDM). Alternatively, the identity management network element may be an independent network element or network function (Network Function, NF). In other words, the identity management network element or the identity management network function is independent of the unified data management network element.

In an implementation, the service subscription request 2 includes an SUPI, and the SUPI is used to identify a terminal device or a user that initiates a third-party service subscription request. In this implementation, the identity management network element uses the SUPI to identify the terminal device or the user.

In another implementation, the identity management network element uses a user number to identify the terminal device or the user. In this implementation, the service subscription request 2 may include an SUPI, or may include a user number.
(1) The service subscription request 2 includes the SUPI. In this implementation, the identity management network element may obtain the user number in the following manner: The access and mobility management network element sends the SUPI of the user to the identity management network element, and the identity management network element obtains the user number from the unified data management network element based on the SUPI. The unified data management network element maintains a correspondence between the SUPI and the user number. For example, the identity management network element and the unified data management network element are integrated, and the identity management network element may obtain the user number from the unified data management network element based on the SUPI. This process is internally implemented by the unified data management network element.
(2) The service subscription request 2 includes the user number. In this implementation, before the access and mobility management network element sends the service subscription request 2, the access and mobility management network element obtains user number information from the unified data management network element based on the SUPI. For example, the access and mobility management network element sends a user information request message to the unified data management network element, where the request message carries the SUPI. Correspondingly, the unified data management network element returns a user information response, where the user information response carries the user number information. A process in which the access and mobility management network element obtains the user number corresponds to S302a and S302b in FIG. 3. After the user number is obtained, the user number is carried in the service subscription request 2.

Optionally, the service subscription request 2 may carry both the user number and the SUPI.

S303: The identity management network element determines a first user identifier. For an implementation method of this step, refer to S202 in FIG. 2. The identity management network element is the second network element in FIG. 2.

S304: The identity management network element sends a service subscription request 3 to an application server (APP Server). For an implementation method of this step, refer to S203 in FIG. 2. The service subscription request 3 corresponds to the second request in FIG. 2, and the application server corresponds to the first application server in FIG. 2.

For example, the identity management network element may send the service subscription request 3 to the application server by using an NEF.

S305: The application server sends a service subscription request 4 to a service management function.

The service subscription request 4 is used to request to subscribe to a service, or request the service management function to create an account for a user to access the service. For content included in the service subscription request 4, refer to the service subscription request 3.

S306: The service management function creates an account corresponding to the service for a user based on the first user identifier. For an implementation method in which the service management function creates the user account based on the first user identifier, refer to S204 in FIG. 2.

S307: The service management function sends a service subscription response 4 to the application server.

In an implementation, the service subscription response 4 includes indication information indicating whether the subscription succeeds. For example, the indication information may be one bit. Optionally, the service subscription response 4 includes the first user identifier.

Optionally, if the user account fails to be created in S306, the service management function sends the service subscription response 4 carrying a subscription failure indication to the application server. For example, a cause of the creation failure is that authentication of a first digital signature of the first user identifier fails. Optionally, a failure cause value (Cause Value) may be further carried, to indicate that a failure cause is that authentication of the first user identifier authenticate fails.

S308: The application server sends a service subscription response 3 to the identity management network element. For an implementation method, refer to S205 in FIG. 2. The service subscription response 3 corresponds to the second response in FIG. 2, and the application server corresponds to the first application server in FIG. 2.

For example, the application server may send the service subscription response 3 to the identity management network element by using the NEF.

S309: The identity management network element stores an association relationship between the first user identifier, a service identifier, and a second user identifier. For an implementation method, refer to S206 in FIG. 2. The identity management network element corresponds to the second network element in FIG. 2.

S310: The identity management network element sends a service subscription response 2 to the access and mobility management network element. For an implementation method, refer to S207 in FIG. 2. The service subscription response 3 corresponds to the first response in FIG. 2, and the access and mobility management corresponds to the first network element in FIG. 2.

S311: The access and mobility management network element sends a service subscription response 1 to the terminal device.

The service subscription response 1 includes indication information indicating whether the subscription succeeds.

Optionally, the service subscription response 1 further includes the first user identifier. The terminal stores the obtained first user identifier, to make it convenient to use the first user identifier in subsequent access to the service.

In another scenario, a same user subscribes to or accesses a service by using different identity attributes, and the second network element creates different first user identifiers based on different identity attributes of the user when creating a first user identifier for the user. The following describes implementation steps of the implementation solution.

In an implementation, the service subscription request 1 in step S301 further includes a user identity attribute. For description of the user identity attribute, refer to step S201 in FIG. 2.

Correspondingly, based on the foregoing steps S302 to S311, the following actions may be added:
In step S302, the service subscription request 2 may further include the user identity attribute.
In step S303, the identity management network element creates different first user identifiers for a same user when the user accesses a same service by using different identity attributes. For an implementation method, refer to step S202 in FIG. 2.
In step S304, the service subscription request 3 may further include the user identity attribute.
In step S305, the service subscription request 4 may further include the user identity attribute.
In step S307, the service subscription response 4 may further include the user identity attribute.
In step S308, the service subscription response 3 may further include the user identity attribute.
In step S309, the identity management network element may further store an association relationship between the user identity attribute, the first user identifier, the second user identifier, and the service identifier. Correspondingly, the association relationship may also use the second user identifier, the service identifier, and the user identity attribute as a query manner. For example, the stored association relationship may be found through the second user identifier, the service identifier, and the user identity attribute. For an implementation method, refer to step S206 in FIG. 2.
In step S310, the service subscription response 2 may further include the user identity attribute.
In step S311, the service subscription response 1 may further include the user identity attribute.

In this implementation, the user may subscribe to a same service for multiple times by using different identity attributes, and the second network element may generate and deliver different first user identifiers for different identity attributes of the same user, thereby ensuring that privacy of the user accessing the service by using different identities is not leaked.

In another scenario, the user may authorize, by using an access control attribute, the first application server to hold the first user identifier to access other services. The following describes steps of this embodiment.

In an implementation, the service subscription request 1 in step S301 further includes a first access control attribute. For description of the first access control attribute, refer to step S202 in FIG. 2.

Correspondingly, based on the foregoing steps S302 to S311, the following actions may be added:
In step S302, the service subscription request 2 may further include the first access control attribute.
In step S304, the service subscription request 3 may further include the first access control attribute.
In step S305, the service subscription request 4 may further include the first access control attribute.
In step S307, the service subscription response 4 may further include the second access control attribute.
In step S308, the service subscription response 3 may further include the second access control attribute.
In step S309, when storing the association relationship between the first user identifier, the second user identifier, and the service identifier, the identity management network element may further store the second access control attribute corresponding to the first user identifier. For an implementation method, refer to step S206 in FIG. 2.
In step S310, the service subscription response 2 may further include the second access control attribute.
In step S311, the service subscription response 1 may further include the second access control attribute.

In another implementation, the service management function in S305 to S307 may be a part of the application server, or a network function of the service management function is carried in the application server, that is, the service management function and the application server are a same network element. In this implementation, the service management function may be combined with the application server, and a combined network element is the application server. After the combination, S305 and S307 in FIG. 3 are internally implemented by the application server. A function of creating the user account in step S306 is implemented by the application server.

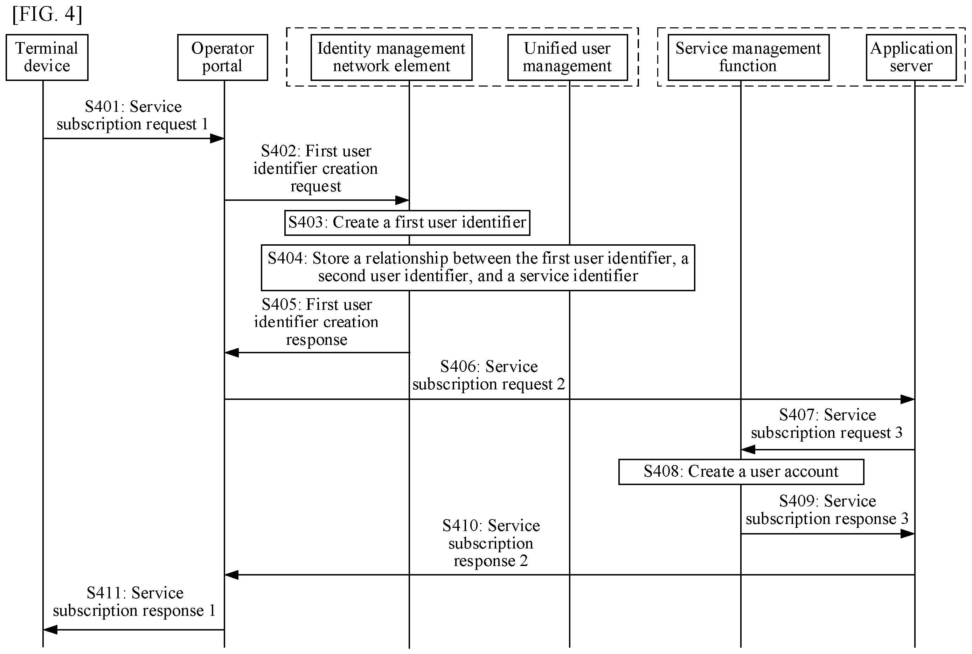

In the method 300, the user initiates a service subscription request to the first application server by using the access and mobility management network element. In another manner, the user may alternatively initiate a service subscription request through an operator portal Portal. In this embodiment, the terminal device of the user is connected to the Portal through the Internet, and the user selects a service to be subscribed to and initiates a subscription request. The following describes implementation steps of the implementation method with reference to FIG. 4.

S401: A terminal device sends a service subscription request 1 to an operator Portal.

For example, the terminal device has been connected to the Internet through a mobile communication network or another network, and can access a server of an operator. Optionally, the terminal device logs in to an operator Portal by using a user number. The terminal device accesses an interface of the operator Portal, selects a service to be subscribed to, and sends a service subscription request to the Portal through the Internet.

The service subscription request 1 carries a service identifier. For description of the service identifier, refer to step S201 in FIG. 2.

Optionally, the service subscription request 1 further carries the user number, and the user number is used to uniquely identify a user. Alternatively, the service subscription request 1 may not carry the user number. When the service subscription request 1 does not carry the user number, the operator Portal may obtain the user number based on login information of the user.

S402: The operator Portal sends a first user identifier creation request to an identity management network element.

The first user identifier creation request carries the service identifier. The first user identifier creation request may further carry the user number. The user number may be obtained by the operator Portal by using account information for logging in to the Portal by the user, or may be carried in the service subscription request 1 in S401.

S403: The identity management network element determines a first user identifier. For an implementation method, refer to step S202 in FIG. 2. The identity management network element corresponds to the second network element in FIG. 2.

It should be noted that, in steps S401 to S403, the identity management network element completes creation of the first user identifier. In the following procedure, the created first user identifier is used to subscribe to a service. When the user initiates a service subscription request through the operator Portal, the following two implementations are available:
In a first implementation, the identity management network element initiates the service subscription request to an application server. In this implementation, a subsequent subscription process is the same as the process described in S304 to S311 in FIG. 3, except that the access and mobility management network element in FIG. 3 is replaced with the operator Portal. Implementation steps corresponding to this implementation are not described in this specification. It should be noted that, in this implementation, the first user identifier creation request in step S402 may also be referred to as a service subscription request.

In a second implementation, the operator Portal initiates the service subscription request to an application server. The following describes implementation steps of the second implementation with reference to FIG. 4.

S404: The identity management network element stores an association relationship between the first user identifier, a service identifier, and a user number. For an implementation method, refer to step S309 in FIG. 3. Optionally, the identity management network element may store the association relationship between the first user identifier, the service identifier, and the user number into a unified user management network element. In this embodiment, after generating the first user identifier, the identity management network element sends the first user identifier to the operator Portal, and the operator Portal initiates a service subscription request to the application server by using the first user identifier. The identity management network element will not receive indication information indicating whether the subscription succeeds. Therefore, in this embodiment, after generating the first user identifier, the identity management network element stores the association relationship between the first user identifier, the service identifier, and the user number.

S405: The identity management network element sends a first user identifier creation response to the operator Portal.

The first user identifier creation response message includes the first user identifier, and the first user identifier is created by the identity management network element in S403. Optionally, the first user identifier creation response may further include the service identifier.

S406: The operator Portal sends a service subscription request 2 to an application server.

The service subscription request 2 includes the first user identifier. Optionally, the service subscription request 2 may further include the service identifier.

For example, after receiving a response message indicating that the first user identifier is successfully created, the operator Portal determines the application server corresponding to the service requested to be subscribed to, for example, based on the service identifier carried in the service subscription request 2, or based on an interface operation on the operator Portal. Then, the operator Portal sends a service subscription request 2 to the application server, where the service subscription request 2 carries the first user identifier, and may further carry the service identifier.

S407: The application server sends a service subscription request 3 to a service management function.

The service subscription request 3 is used to request to subscribe to a service, or request the service management function to create an account for a user to access the service. For content included in the service subscription request 3, refer to the service subscription request 2.

S408: The service management function creates an account corresponding to the service for a user based on the first user identifier. For an implementation method, refer to S204 in FIG. 2. The service management function corresponds to the first application server in FIG. 2.

S409: The service management function sends a service subscription response 3 to the application server.

In an implementation, the service subscription response 3 includes indication information indicating whether the subscription succeeds. For example, the indication information may be one bit. Optionally, the service subscription response 4 includes the first user identifier.

Optionally, if the authentication of the first digital signature of the first user identifier in S408 fails, the service management function sends a service subscription response carrying a subscription failure indication to the application server. Optionally, a failure cause value (Cause Value) may be further carried, to indicate that a failure cause is that authentication of the first user identifier authenticate fails.

S410: The application server sends a service subscription response 2 to the operator Portal.

The service subscription response 2 includes indication information indicating whether the subscription succeeds. For example, the indication information may be one bit. For example, if the service subscription response 2 carries a bit 1 or true, it indicates that the service subscription succeeds. Otherwise, if the second response carries 0 or false, or carries no value, it indicates that the service subscription fails. The service subscription response 2 further includes the first user identifier.

Optionally, the service subscription response 2 further includes the service identifier.

S411: The operator Portal sends a service subscription response 1 to the terminal device.

The service subscription response 1 includes indication information indicating whether the subscription succeeds. For content of the indication information, refer to S410. The service subscription response 1 further includes the first user identifier. The terminal stores the obtained first user identifier, to make it convenient to use the first user identifier in subsequent access to the service.

Optionally, the service subscription response 1 may further include the user number.

In this embodiment, the user initiates a service subscription request through the operator Portal. In the subscription request process, the first application server obtains only the first user identifier generated by the identity management network element for the user, does not directly obtain the user number, and does not obtain an association relationship between the first user identifier and the user number either. Therefore, the first application server is prevented from obtaining personal privacy information such as a user phone number, thereby avoiding privacy leakage.

Similar to the second implementation method in FIG. 3, the identity management network element may also generate different first user identifiers for the user to subscribe to or access a same service by using different identities, to avoid privacy leakage caused when the user subscribes to or accesses a service by using different identity attributes.

In an implementation, the service subscription request 1 in step S401 further includes a user identity attribute. For description of the user identity attribute, refer to step S201 in the second implementation in FIG. 2.

Correspondingly, based on the foregoing steps S402 to S411, the following actions may be added:

In step S402, the first user identifier creation request may further include the user identity attribute.

In step S403, the identity management network element creates different first user identifiers for a same user when the user accesses a same service by using different identity attributes. For an implementation method, refer to step S202 in the second implementation in FIG. 2.

In step S404, the identity management network element may further store an association relationship between the user identity attribute, the first user identifier, the second user identifier, and the service identifier. For an implementation method, refer to step S309 in the second implementation in FIG. 3. Optionally, the identity management network element may store the association relationship between the user identity attribute, the first user identifier, the second user identifier, and the service identifier into the unified user management network element.

In step S405, the first user identifier creation response may further include the user identity attribute.

In step S406, the service subscription request 2 may further include the user identity attribute.

In step S407, the service subscription request 3 may further include the user identity attribute.

In step S409, the service subscription response 3 may further include the user identity attribute.

In step S410, the service subscription response 2 may further include the user identity attribute.

In step S411, the service subscription response 1 may further include the user identity attribute.

In this implementation, the user may subscribe to a same service for multiple times by using different identity attributes, and the second network element may generate and deliver different first user identifiers for different identity attributes of the same user, thereby ensuring that privacy of the user accessing the service by using different identities is not leaked.

Similar to the third implementation method in FIG. 3, the user may also authorize, by using an access control attribute, the first application server to hold the first user identifier to access other services.

In an implementation, the service subscription request 1 in step S401 further includes an access control attribute. For description of the access control attribute, refer to step S202 in FIG. 2.

Correspondingly, based on the foregoing steps S402 to S411, the following actions may be added:
In step S402, the first user identifier creation request may further include the access control attribute.
In step S403, the attribute information of the first user identifier may further include the access control attribute.
In step S404, when storing the association relationship between the first user identifier, the second user identifier, and the service identifier, the identity management network element may further store the access control attribute corresponding to the first user identifier. For an implementation method, refer to step S309 in FIG. 3. Alternatively, the identity management network element may store the access control attribute of the first user identifier into the unified user management network element. The service subscription request 2 may further include the access control attribute.
In step S405, the first user identifier creation response may further include the access control attribute.
In step S406, the service subscription request 2 may further include the access control attribute.
In step S407, the service subscription request 3 may further include the access control attribute.
In step S409, the service subscription response 3 may further include the access control attribute.
In step S410, the service subscription response 2 may further include the access control attribute.
In step S411, the service subscription response 1 may further include the access control attribute.

In another implementation, the service management function in S407 to S409 may be a part of the application server, or a network function of the service management function is carried in the application server, that is, the service management function and the application server are a same network element. In this implementation, the service management function may be combined with the application server, and a combined network element is the application server. After the combination, S407 and S409 in FIG. 4 are internally implemented by the application server. A function of creating the user account in step S408 is implemented by the application server.

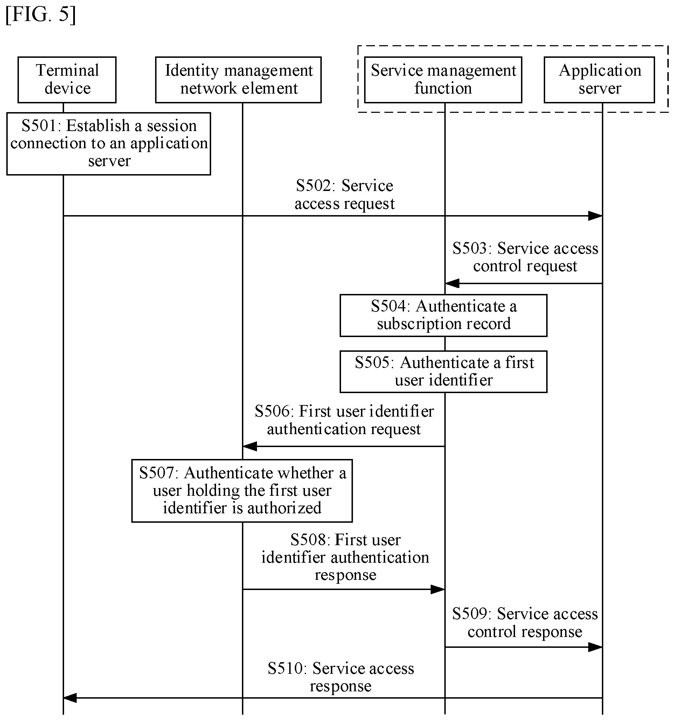

With reference to FIG. 5, the following describes a process in which a user accesses a service by using a first user identifier.

S501: A terminal device establishes a session connection to an application server. After the session connection is established, the terminal device may communicate with the application server.

S502: The terminal device sends a service access request message to the application server.

In an implementation, when the user is ready to access a service, an application client or a browser on the terminal device sends a service access request message to the application server, where the service access request message includes the first user identifier of the user. For content of the first user identifier, refer to step S202 in FIG. 2.

S503: After receiving the service access request message, the application server sends a service access control request message to a service management function.

The access control request message carries the first user identifier of the user, and content of the first user identifier is the same as that in S502. The access control request message is used to request the service management function to authenticate a subscription record of the user.

S504: The service management function authenticates a subscription record of the user.

In an implementation, that the service management function authenticates the subscription record of the user includes that the service management function searches for a service subscription record of the user by using the first user identifier. For example, the service management function uses a character string that can uniquely identify the user in the first user identifier as a user account to search for a service subscription record of the user. For an authentication method, refer to the process of authenticating the subscription record of the user in step S210 in FIG. 2.

It should be noted that, if the authentication of the subscription succeeds, S505 is performed; or if the authentication fails, S509 is directly performed after S504.

S505: The service management function authenticates a first user identifier of the user, authenticates whether the first user identifier is provisioned by an authorized identity management network element, and/or authenticates a validity period attribute of the first identifier. For an authentication method, refer to the part of authenticating the first user identifier in step S210 in FIG. 2.

It should be noted that, if the service management function needs to request the identity management network element to authenticate the first user identifier (for a specific scenario, refer to the description in step S210 in FIG. 2), S506 to S508 are performed after S505. Otherwise, the service management function may autonomously authenticate the first user identifier. For an authentication method, refer to the description in step S210 in FIG. 2. It should be noted that, if the service management function autonomously authenticates the first user identifier, S506 to S508 are not performed, and S509 is directly performed after S505.

S506: The service management function sends a first user identifier authentication request to an identity management network element.

The first user identifier authentication request includes the first user identifier.

For content of the first user identifier authentication request, refer to the first authentication request in step S211 in FIG. 2. In other words, the first user identifier authentication request corresponds to the first authentication request in FIG. 2.

S507: The identity management network element authenticates the first user identifier and validity of the user that holds the first user identifier. For an authentication method, refer to step S212 in FIG. 2.

S508: The identity management network element sends a first user identifier authentication response to the service management function.

The first user identifier authentication response includes indication information indicating whether the authentication succeeds.

Optionally, the first user identifier authentication response may further include the first user identifier.

Optionally, the first user identifier authentication response may further include a service identifier.

S509: The service management function sends an access control response to the application server.

In an implementation, the service management function sends an access control response message to the application server, to indicate whether user identity authentication succeeds.

Optionally, the access control response may further include the first user identifier.

Optionally, the access control response may further include a service identifier.

S510: The application server sends a service access response to the terminal device.

For example, the application server decides, based on the service access control response, whether to accept the service access of the user. If both the authentication of the user subscription record and the authentication of the first user identifier succeed, the application server may determine to accept the service access request of the user; otherwise, the application server may determine to reject the service access request of the user. The application server sends a service access response message to the terminal, where the service access response message carries indication information indicating that access is granted or access is denied.

In this embodiment, the user accesses a service by using the first user identifier generated by the identity management network element of the operator. The first application server does not directly obtain the user number, and does not obtain an association relationship between the first user identifier and the user number either. Therefore, the first application server is prevented from obtaining an association relationship between the user number and service access information, thereby avoiding privacy leakage.

In another implementation, the service management function may be a part of the application server, or a network function of the service management function is carried in the application server, that is, the service management function and the application server are a same network element. In this implementation, the service management function may be combined with the application server, and a combined network element is the application server. After the combination, S503 and S509 in FIG. 5 are internally implemented by the application server. Functions in steps S504 and S505 are implemented by the application server. Interaction between S506 and S508 is also completed by the identity management network element and the application server.

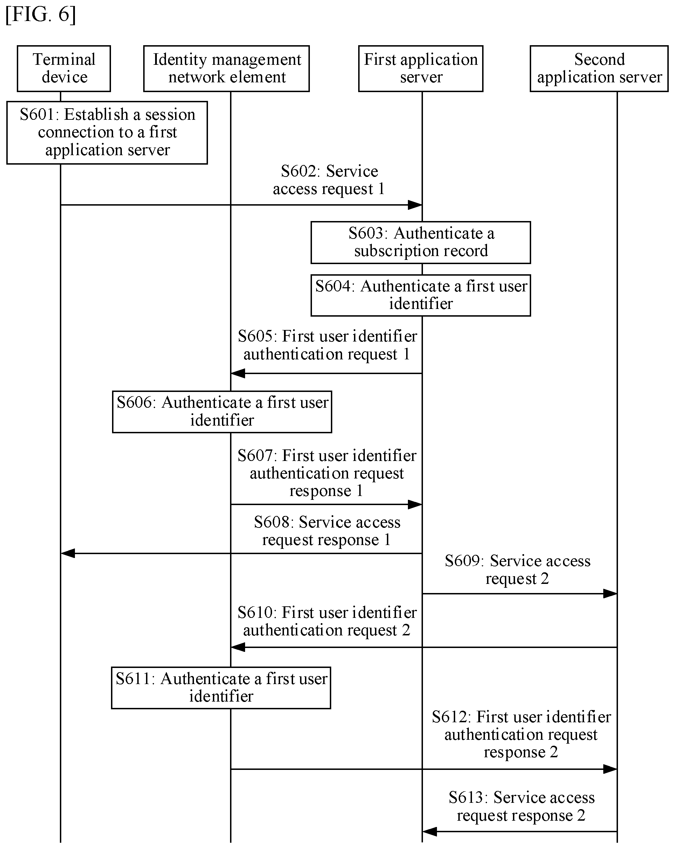

In another implementation, the user authorizes, by using an access control attribute, the first application server to access other services on behalf of the user. The following describes implementation steps of this embodiment with reference to FIG. 6.

S601: A terminal device establishes a session connection to a first application server. After the session connection is established, the terminal device may communicate with the first application server. For a specific process, refer to S501. For example, the first application server may be a smart assistant server.

S602: The terminal device sends a service access request 1 to the first application server. For an implementation method, refer to step S502 in FIG. 5. The service access request 1 corresponds to the service access request in FIG. 5.

S603: The first application server authenticates a subscription record of a user. For an implementation method, refer to step S504 in FIG. 5.

S604: The first application server authenticates a first user identifier of the user. For a method for authenticating the first user identifier, refer to step S505 in FIG. 5.

S605: The first application server sends a first user identifier authentication request 1 to an identity management network element. For an implementation method, refer to step S506 in FIG. 5. The first user identifier authentication request 1 corresponds to the first user identifier authentication request in FIG. 5.

S606: The identity management network element authenticates the first user identifier of the user. For an authentication method, refer to step S507 in FIG. 5.

S607: The identity management network element sends a first user identifier authentication response 1 to the first application server. For content of the first user identifier authentication response 1, refer to the first user identifier authentication response in step S508 in FIG. 5.

S608: The first application server sends a service access response 1 to the terminal device. For content of the service access response 1, refer to the service access response in step S510 in FIG. 5.

S609: The first application server sends a service access request 2 to the second application server. For an implementation, refer to step S214 in FIG. 2. The service access request 2 corresponds to the service access request 2 in step S214 in FIG. 2.

Optionally, before S609, the terminal device sends indication information to the first application server, where the indication information indicates a service that the terminal device indicates the first application server to access, for example, indicates the first application server to provide a smart assistant service. The terminal device indicates, in the indication information, a smart assistant to access the second application server to perform a ticket booking service. The second application server provides the ticket booking service.

S610: The second application server sends a first user identifier authentication request 2 to an identity management network element. For an implementation, refer to step S215 in FIG. 2. The first user identifier authentication request 2 corresponds to the second authentication request in step S215 in FIG. 2.

S611: The identity management network element authenticates the first user identifier of the user. For an implementation, refer to step S216 in FIG. 2.

S612: The identity management network element sends a first user identifier authentication response 2 to the second application server, where the first user identifier authentication response 2 includes indication information indicating whether the authentication succeeds.

Optionally, the first user identifier authentication response may further include the first user identifier.

Optionally, the first user identifier authentication response may further include a service identifier.

S613: After receiving the first user identifier authentication response 2, the second application server sends a service access request response 2 to the first application server. For example, the service access request response 2 may be accepting a service access request initiated by the first application server, or may be rejecting a service access request initiated by the first application server. After accepting the service access request of the first application server, the second application server may communicate with the first application server.

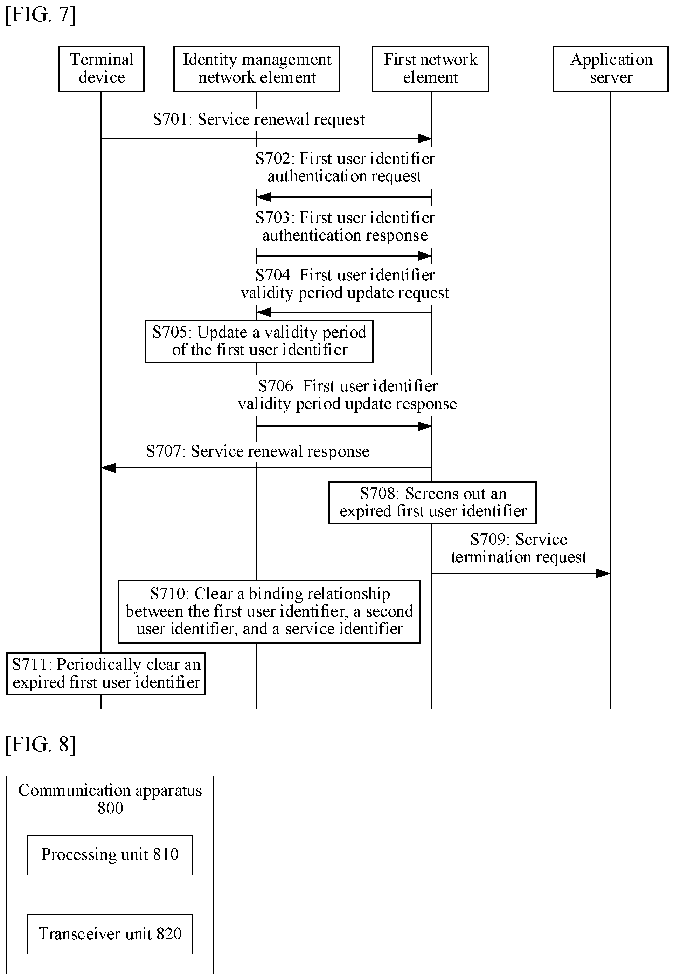

After successfully subscribing to a service, the user may use an identity management network element of an operator to generate and provision the first user identifier for the user within a validity period to access the subscribed service. If the user intends renewal before the validity period expires, the first user identifier may be used to initiate service renewal. The following describes a service renewal process with reference to FIG. 7.

S701: A terminal device sends a service renewal request to a first network element.

For example, the first network element may be an operator Portal, or may be an access and mobility management network element.

In an implementation, the service renewal request carries a service identifier and a first user identifier that is issued by a second network element during subscription. The terminal device determines, based on a validity period corresponding to the first user identifier, that the first user identifier is about to expire. For example, the terminal device may determine, by determining magnitudes of a specified threshold and a time interval between a moment at which the first user identifier expires and that is indicated by a validity period attribute and a current moment, that the first user identifier is about to expire. For example, it is assumed that the threshold is 24 hours. If the terminal device determines that a difference between the current moment and the moment indicated by the validity period is less than 24 hours, the terminal device sends the service renewal request to the first network element.

S702: The first network element sends a first user identifier authentication request to an identity management network element, to request the identity management network element to authenticate a first user identifier in the service renewal request.

In an implementation, the first user identifier authentication request message includes the first user identifier. For an authentication method, refer to S212.

S703: The identity management network element sends a first user identifier authentication response to the first network element.

In an implementation, the first user identifier authentication response carries an indication indicating whether the authentication of the first user identifier succeeds. For example, the indication information may be one bit. If the first user identifier authentication response message carries a bit 1 or true, it indicates that the authentication of the first user identifier succeeds. Otherwise, if the second response carries 0 or false, or carries no value, it indicates that the authentication fails.

S704: The first network element sends a first user identifier validity period update request to the identity management network element.

In an implementation, the first user identifier update request is used to request the identity management network element to update validity period attribute information in the first user identifier, where the first user identifier update request carries the first user identifier and new validity period attribute information.

Optionally, S704 and S702 may be combined for implementation. For example, the service renewal request sent by the terminal device to the first network element carries the new validity period attribute information of the first user identifier.

S705: The identity management network element updates a validity period attribute in the first user identifier, and performs digital signature on the first user identifier.

For example, the identity management network element replaces the validity period attribute information corresponding to the original first user identifier with the new validity period attribute information carried in S704, and then performs digital signature on the first user identifier.

S706: The identity management network element sends a first user identifier validity period update response message to the first network element.

In an implementation, the first user identifier validity period update response message carries the first user identifier whose validity period has been updated in S705, that is, a first digital signature of the first user identifier is updated.

Optionally, the first user identifier validity period update response message further carries a new validity period corresponding to the first user identifier.

S707: After receiving the first user identifier validity period update success response message, the first network element sends a response message indicating service subscription success to the terminal device, where the response message carries a subscription success indication and the first user identifier whose validity period has been updated.

S708: If a user does not perform service renewal before the validity period of the first user identifier expires, the first network element checks first user identifiers, and screens out an expired first user identifier.

S709: The first network element determines a corresponding application server based on a service identifier corresponding to the expired first user identifier, and sends a service termination request message to the application server, where the service termination request message carries the service identifier and the expired first user identifier. After receiving the service termination request message, the application server deletes user account information corresponding to the first user identifier.

S710: If the user does not perform service renewal before the validity period of the first user identifier expires, the identity management network element screens out an expired first user identifier, and clears an association relationship between the first user identifier, a second user identifier, and the service identifier. For content of the second user identifier, refer to the description in S201 in FIG. 2.

S711: The terminal device periodically clears an expired first user identifier. For example, the terminal device uses T as a check period of validity periods of first user identifiers, checks whether the first user identifiers are within the validity periods corresponding to the first user identifiers, and clears an expired first user identifier.

In this embodiment, before the validity period of the first user identifier expires, the terminal device may extend the validity period of the first user identifier by renewing a third-party service, and when updating the validity period attribute, the terminal device does not change a character string that uniquely identifies the user in the original first user identifier.

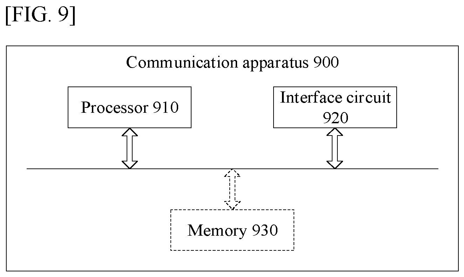

FIG. 8 and FIG. 9 are diagrams of structures of possible communication apparatuses according to embodiments of this application. These communication apparatuses may be configured to implement functions of the terminal device, the identity management network element, or the application server in the foregoing method embodiments, and therefore can also achieve beneficial effects of the foregoing method embodiments. In this embodiment of this application, the communication apparatus may be the foregoing device or a module (for example, a chip) in the foregoing device.

As shown in FIG. 8, a communication apparatus 800 includes a processing unit 810 and a transceiver unit 820. The communication apparatus 800 is configured to implement a function of the terminal device, the identity management network element, or the application server in the method embodiment shown in any one of FIG. 2, FIG. 3, FIG. 4, FIG. 5, FIG. 6, and FIG. 7.

When the communication apparatus 800 is configured to implement the function of the identity management network element in the method embodiments shown in the foregoing accompanying drawings:
The transceiver unit 820 is configured to receive a first request, where the first request includes a service identifier, and the service identifier is used to identify a service that a user requests to subscribe to; and the processing unit 810 is configured to determine a first user identifier, where the first user identifier is used to identify the user, the first user identifier is different from another first user identifier created for another service that the user requests to subscribe to, the first user identifier is used to request to subscribe to the service, and the first user identifier is further used to request to access the service.

When the communication apparatus 800 is configured to implement the function of the terminal device in the method embodiments shown in the foregoing accompanying drawings:
The processing unit 810 is configured to send a service subscription request to a first network element by using the transceiver unit 820, where the service subscription request is used to request to subscribe to a service, the service subscription request includes a service identifier, and the service identifier is used to indicate the service that a user requests to subscribe to; and the processing unit 810 is configured to receive a service subscription response by using the transceiver unit 820, where the service subscription response is used to indicate that the service is successfully subscribed to, the service subscription response includes a first user identifier, the first user identifier is used to access the service, and the first user identifier is different from another first user identifier corresponding to another service that the user requests to access.

When the communication apparatus 800 is configured to implement the function of the application server in the method embodiments shown in the foregoing accompanying drawings:
The processing unit 810 is configured to receive a service access request by using the transceiver unit 820, where the service access request includes a first user identifier, the first user identifier is used to access a service, and the first user identifier is different from another first user identifier corresponding to another service that the user requests to access; and the processing unit 810 is configured to send an authentication request to the first network element by using the transceiver unit 820, where the authentication request is used to request the first network element to authenticate the first user identifier, the first user identifier is generated by the first network element, and the authentication request includes the first user identifier.

For more detailed descriptions of the processing unit 810 and the transceiver unit 820, directly refer to related descriptions in the method embodiments shown in the foregoing accompanying drawings. Details are not described herein again.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data for the processor 910 to run instructions, or store data generated after the processor 910 runs instructions.

When the communication apparatus 900 is configured to implement the method shown in the accompanying drawings, the processor 910 is configured to implement a function of the processing unit 910, and the interface circuit 920 is configured to implement a function of the transceiver unit 920.

When the communication apparatus is a chip used for the foregoing device, the chip implements a function of a corresponding device in the foregoing method embodiments. The chip receives information from another module (for example, a radio frequency module or an antenna) in the device, where the information is sent by another device to the device; or the chip sends information to another module (for example, a radio frequency module or an antenna) in the device.

When the communication apparatus is a module used for a mobile node, the module implements a function of the mobile node in the foregoing method embodiments. The module receives information from another module (for example, a radio frequency module or an antenna), where the information is sent by the terminal to the device; or the module sends information to another module (for example, a radio frequency module or an antenna) in the device, where the information is sent by the device to the terminal. The module herein may be a baseband chip in the device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. An example in which the communication apparatus includes one processor and one memory is used. As shown in FIG. 9, the communication apparatus 900 includes one processor 910 and one memory 930. The processor 910 is coupled to the memory 930. The memory 930 stores instructions. When the instructions stored in the memory 930 are executed by the processor 910, the communication apparatus 900 performs the method performed by the terminal device or the network device in the foregoing embodiments.

It should be understood that the processor 910 and the memory 930 may alternatively be integrated together, for example, integrated in a chip.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A service processing method, wherein the method comprises:
receiving a first request, wherein the first request comprises a service identifier, and the service identifier is used to identify a service that a user requests to subscribe to; and
determining a first user identifier, wherein the first user identifier is used to identify the user, the first user identifier is different from another first user identifier created for another service that the user requests to subscribe to, the first user identifier is used to request to subscribe to the service, and the first user identifier is further used to request to access the service.

2. The method according to claim 1, wherein the receiving the first request comprises: receiving the first request from a first network element, wherein the first network element is an access and mobility management network element or an operator portal.

3. The method according to claim 1 or 2, wherein the method further comprises:
sending a second request to a first application server, wherein the second request comprises the first user identifier, the second request is used to request to subscribe to the service, and the first application server is configured to process the service; and
receiving a second response from the first application server, wherein the second response is used to indicate whether the service that the user requests to subscribe to is successfully subscribed to.

4. The method according to claim 3, wherein the method further comprises:
receiving a first authentication request from the first application server, wherein the first authentication request comprises the first user identifier; and
authenticating, based on the first user identifier, that the user is an authorized user.

5. The method according to any one of claims 1 to 4, wherein the first request comprises a second user identifier, wherein the second user identifier is a user number of the user and/or a subscriber permanent identifier SUPI.

6. The method according to claims 1 to 5, wherein the method further comprises:
sending a first response to the first network element, wherein the first response is used to indicate that subscription of the service requested by the user succeeds, and the first response comprises the first user identifier.

7. The method according to claim 6, wherein the first response further comprises a validity period, the validity period is used to indicate a period in which the first user identifier is valid, and the first user identifier is unavailable when the validity period expires.

8. The method according to any one of claims 1 to 7, wherein the method further comprises:
determining the validity period corresponding to the first user identifier.

9. The method according to claim 7 or 8, wherein the method further comprises:
determining, based on the validity period after receiving the first authentication request from the first application server, whether the first application server holds the valid first user identifier to access the service.

10. The method according to claim 5, wherein the method further comprises:
storing an association relationship between the first user identifier, the service identifier, and the second user identifier; and
authenticating, based on the association relationship between the first user identifier, the service identifier, and the second user identifier after receiving the first authentication request from the first application server, that the user holding the first user identifier is an authorized user.

11. The method according to any one of claims 1 to 10, wherein the first request further comprises a user identity attribute, and the user identity attribute is used to indicate an identity type used by the user to request to subscribe to the service.

12. The method according to claim 11, wherein the determining the first user identifier comprises:
the first user identifier created for the user identity attribute of the user and used to request to subscribe to the service is different from another first user identifier created for another identity attribute of the user and used to request to subscribe to the service.

13. The method according to any one of claims 1 to 12, wherein the first user identifier comprises a first digital signature, and the method further comprises:
authenticating, after receiving the first authentication request from the first application server, whether the first user identifier is valid based on the first digital signature.

14. The method according to claim 4, wherein the first authentication request further comprises a second digital signature corresponding to the first user identifier, and the method further comprises:
authenticating, after receiving an authentication request comprising the second digital signature corresponding to the first user identifier, whether the first user identifier is valid based on the second digital signature.

15. The method according to claim 14, wherein the first authentication request further comprises replay attack authentication information corresponding to the first user identifier, and the method further comprises:
authenticating, based on the replay attack authentication information after receiving an authentication request comprising the replay attack authentication information corresponding to the first user identifier, whether the user holding the first user identifier is an authorized user.

16. The method according to any one of claims 1 to 15, wherein the first request further comprises a first access control attribute, and the first access control attribute is used to indicate whether the user authorizes the first application server to hold the first user identifier to access other services on behalf of the user, and/or a scope in which the first application server is authorized to access the other services on behalf of the user.

17. The method according to claim 16, wherein the second response received from the first application server further comprises a second access control attribute, and the second access control attribute is used to indicate whether the first application server accepts holding the first user identifier to access the other services, and/or a scope in which the first application server accepts accessing the other services.

18. The method according to claim 17, wherein the first response sent to the first network element further comprises the second access control attribute.

19. The method according to claim 17 or 18, wherein the method further comprises:
determining, based on the second access control attribute after receiving an authentication request that comprises the second access control attribute, whether the first application server is authorized to hold the first user identifier to access the other services.

20. The method according to any one of claims 17 to 19, wherein the method further comprises:
receiving a second authentication request from a second application server, wherein the second authentication request is used to request to authenticate whether the first application server is authorized to hold the first user identifier, and the second authentication request comprises the first user identifier.

21. A service processing method, wherein the method comprises:
sending a service subscription request to a first network element, wherein the service subscription request is used to request to subscribe to a service, the service subscription request comprises a service identifier, and the service identifier is used to indicate the service that a user requests to subscribe to; and
receiving a service subscription response, wherein the service subscription response is used to indicate that the service is successfully subscribed to, the service subscription response comprises a first user identifier, the first user identifier is used to access the service, and the first user identifier is different from another first user identifier corresponding to another service that the user requests to access.

22. The method according to claim 21, wherein the service subscription request further comprises a first access control attribute, the first access control attribute is used to indicate that the user authorizes the first application server to access other services on behalf of the user, and/or a scope in which the first application server is authorized to access the other services on behalf of the user, and the first application server is configured to process the service.

23. The method according to claim 21 or 22, wherein the service subscription request comprises a user identity attribute, and the user identity attribute is used to indicate an identity type used by the user to request to subscribe to the service.

24. The method according to any one of claims 21 to 23, wherein the method further comprises:
sending a service access request to the first application server, wherein the service access request is used to request to access the service, and the service access request comprises the first user identifier.

25. The method according to any one of claims 21 to 24, wherein the service access request comprises a second access control attribute obtained from the service subscription response, and the second access control attribute is used to indicate whether the first application server accepts holding the first user identifier to access the other services, and/or a scope in which the first application server accepts accessing the other services.

26. The method according to any one of claims 21 to 25, wherein the service access request comprises a validity period obtained from the service subscription response, and the validity period is used to determine whether the first user identifier is valid.

27. The method according to any one of claims 21 to 26, wherein the method comprises:
sending a third request to the first network element, wherein the third request is used to request to renew the service, and the third request comprises the first user identifier; and
receiving a third response sent by the first network element, wherein the third response is used to indicate whether renewal of the third-party service succeeds, and the third response comprises the first user identifier whose validity period has been updated.

28. The method according to claim 27, wherein the sending the third request to the first network element comprises:
determining, based on the validity period, that the first user identifier is about to expire, and sending the third request before the validity period of the first user identifier expires.

29. A service processing method, wherein the method comprises:
receiving a service access request, wherein the service access request comprises a first user identifier, the first user identifier is used to access a service, and the first user identifier is different from another first user identifier corresponding to another service that the user requests to access; and
sending an authentication request to the first network element, wherein the authentication request is used to request the first network element to authenticate the first user identifier, the first user identifier is generated by the first network element, and the authentication request comprises the first user identifier.

30. The method according to claim 29, wherein the first user identifier comprises a first digital signature, and the first digital signature is used to authenticate whether the first user identifier is valid.

31. The method according to claim 29 or 30, wherein the service access request comprises a validity period corresponding to the first user identifier, the validity period is used to indicate a period in which the first user identifier is valid, and the first user identifier is unavailable when the validity period expires.

32. The method according to any one of claims 29 to 31, wherein the service access request comprises an access control attribute, the access control attribute is used to indicate whether a first application server accepts holding the first user identifier to access other services, and/or a scope in which the first application server accepts accessing the other services, and the first application server is configured to process the service.

33. The method according to any one of claims 29 to 32, wherein the authentication request further comprises the access control attribute, and the access control attribute is used to determine whether the first application server is authorized to hold the first user identifier to access the other services.

34. The method according to any one of claims 29 to 33, wherein the authentication request further comprises a second digital signature, the second digital signature is created by the user, and the second digital signature is used to authenticate whether the first user identifier is valid.

35. The method according to any one of claims 29 to 34, wherein the authentication request further comprises replay attack authentication information corresponding to the first user identifier, and the replay attack authentication information is used to authenticate whether the user holding the first user identifier is an authorized user.

36. The method according to any one of claims 29 to 35, wherein the authentication request further comprises the validity period, wherein the validity period is used to determine whether the first application server holds the valid first user identifier to access the service.

37. The method according to any one of claims 29 to 36, wherein the method further comprises:
receiving an authentication response from the first network element, wherein the authentication response is used to indicate that authentication of the first user identifier succeeds.

38. The method according to any one of claims 29 to 37, wherein the method further comprises:
sending the service access request to a second application server, wherein the service access request is used to request to access the other services, and the second application server is configured to process the other services.

39. A communication system, comprising an identity management network element and a terminal device, wherein the identity management network element is configured to implement the method according to any one of claims 1 to 20 or the method according to any one of claims 29 to 38, and the terminal device is configured to implement the method according to any one of claims 21 to 28.

40. A communication apparatus, comprising a unit or a module configured to perform the method according to any one of claims 1 to 20, or comprising a unit or a module configured to perform the method according to any one of claims 21 to 28, or a unit or a module configured to implement the method according to any one of claims 29 to 38.

41. A readable storage medium, wherein the readable storage medium stores a program, and when the program is executed by a communication apparatus, the method according to any one of claims 1 to 20, or the method according to any one of claims 21 to 28, or the method according to any one of claims 29 to 38 is implemented.

42. A computer program product, wherein the computer program product comprises instructions, and when the instructions run on a processor, the processor is caused to perform the method according to any one of claims 1 to 20, or perform the method according to any one of claims 21 to 28, or is configured to implement the method according to any one of claims 29 to 38.
